# EUROPEAN PATENT SPECIFICATION

(11) **EP 4 195 034 B1**
(45) Date of publication and mention of the grant of the patent: **25.06.2025**
(21) Application number: 20948579.6
(22) Date of filing: 04.08.2020
(51) Int. Cl.: G06F 9/445, G06F 11/14, G06F 21/31

(54) **IN-VEHICLE INFOTAINMENT SYSTEM AND METHOD FOR UPGRADING SAME**
FAHRZEUGINTERNES INFOTAINMENTSYSTEM UND VERFAHREN ZUR AKTUALISIERUNG DAVON
SYSTÈME D'INFODIVERTISSEMENT EMBARQUÉ DANS UN VÉHICULE ET SON PROCÉDÉ DE MISE À NIVEAU

(43) Date of publication of application: 14.06.2023
(73) Proprietor: LG ELECTRONICS INC., Yeongdeungpo-Gu Seoul 07336 (KR)
(72) Inventor: KIM, Jinkyoung, Seoul 06772 (KR); PARK, Hyungbin, Seoul 06772 (KR); HONG, Ilgyeong, Seoul 06772 (KR)
(74) Representative: Vossius & Partner Patentanwälte Rechtsanwälte mbB
(86) International application number: PCT/KR2020/010256
(87) International publication number: WO 2022/030658

(56) References cited:
- KR-A- 20130 075 628
- KR-A- 20170 001 488
- KR-A- 20170 025 671
- KR-A- 20190 094 732
- US-A1- 2002 053 044
- US-A1- 2010 169 981
- US-A1- 2014 309 862
- US-A1- 2019 297 476

## Description

### BACKGROUND

### 1. Field

The present disclosure relates to an in-vehicle infotainment system and a method for upgrading the same, and more particularly, to an in-vehicle infotainment system that can detachably upgrade, and a method for upgrading the in-vehicle infotainment system.

### 2. Description of the Related Art

A vehicle may be classified into an internal combustion engine vehicle, an external combustion engine vehicle, a gas turbine vehicle, an electric vehicle, or the like, according to a type of used motive power.

An infotainment system is an integrated system of information and entertainment, and an in-vehicle infotainment system may refer to an integrated system of entertainment that can be enjoyed in a vehicle and information.

As such, since the in-vehicle infotainment system provides entertainment, it is necessary to upgrade to an infotainment system that can use the latest processor and latest memory, considering the trend of high capacity over time.

In general, a method for upgrading software of an in-vehicle infotainment system through USB or wireless communication is known. However, such a method has a fundamental limitation because processor and memory cannot be replaced.

Accordingly, an in-vehicle infotainment system capable of replacing a processor and a memory is required, and furthermore, there is a problem in that when the processor and the memory are replaced, existing user experience-based data is lost.

US 2010/169981 A1 discloses a method and system for replacing, implementing and managing computer-related assets. US 2014/309862 A1 discloses a system to access one or more user profiles that govern one or more vehicle functions. The system cooperates with a processor and verification module which are adapted to verify, using one or more of biometric information, gesture recognition, facial recognition and device identification information. US 2002/053044 A1 discloses a method of restoring an operational state of a computer entity when the computer entity is in a system failure.

### SUMMARY

An object of the present disclosure is to provide an in-vehicle infotainment system for a user to easily upgrade performance, and a method for upgrading the same.

In addition, another object of the present disclosure is to provide an in-vehicle infotainment system that can use existing user experience-based data intactly, even if equipment is replaced, and a method for upgrading the same.

In addition, another object of the present disclosure is to provide an in-vehicle infotainment system for safely storing, transmitting and receiving data by encrypting existing user experience-based data, and a method for upgrading the same.

In addition, another object of the present disclosure is to provide an in-vehicle infotainment system that can use a memory for a longer period of time by dividing a non-replaced memory into a plurality of partitions, and a method for upgrading the same.

The technical problems to be achieved by the present disclosure are not limited to the technical problems mentioned above, and other technical problems not mentioned will be clearly understood by those of ordinary skill in the art to which the present disclosure pertains from the following detailed description of the invention.

The above-identified problems are solved by the present invention defined by the appended independent claims, and preferred aspects of the prevent invention are defined by the appended dependent claims. Further, the present disclosure provides an in-vehicle infotainment system including: a first device which is included in a vehicle, and includes a first memory; a second device which is electrically connected to the first device, is attachable or detachable to the vehicle or from the vehicle, and includes a second memory; and an interface configured to electrically connect the second device to the first device, wherein the first memory stores first data including user-customized data, the second device executes a first application based on the first data, and the first application is stored in the second memory.

In addition, the second device is replaced with a third device including a third memory.

In addition, the third device executes a second application based on the first data, and the second application is stored in the third memory.

In addition, the first data further includes application data received from the second device, and the third device executes the second application based on the application data.

In addition, the first memory is divided into a plurality of partitions.

In addition, the plurality of partitions includes a first partition to store the first data.

In addition, the plurality of partitions includes a first partition and a second partition to alternately store the first data.

In addition, the first data is encrypted and stored in the first memory.

In addition, the first data is encrypted and transmitted to the second device.

In addition, the first data further includes application list information received from the second device, and the third device installs a third application based on the application list information.

In addition, in order to solve the above problems, the present disclosure provides a method for upgrading an in-vehicle infotainment system by replacing a second device mounted in a vehicle including a first device with a third device, the method including: receiving first data including user-customized data from the second device; storing the first data in a first memory of the first device; receiving a dismounting message for the second device; receiving a coupling message for the third device; and transmitting the first data to the third device, wherein the second device executes a first application based on the first data.

In addition, the third device executes a second application based on the first data.

In addition, the receiving first data includes: detecting occurrence of an event for a backup of the first data; executing a zero-defect test on the first data; and receiving the first data based on the first data being zero-defect.

In addition, the receiving first data includes recovering the first data based on the first data not being zero-defect.

In addition, the first memory is divided into a plurality of partitions, and the first data is stored in any one of the plurality of partitions.

In addition, the plurality of partitions includes a first partition and a second partition to alternately store the first data.

In addition, the first data further includes application data or application list information received from the second device, and the application list information is a list of a plurality of applications installed in the second device.

In addition, the third device receives and installs a third application from an external server based on the application list information.

In addition, the first data is encrypted and stored in the first memory.

In addition, the first data is encrypted and received from the second device, and the first data is encrypted and transmitted to the third device.

### EFFECTS OF THE DISCLOSURE

The present disclosure has an effect of providing an in-vehicle infotainment system for a user to easily upgrade performance, and a method for upgrading the same.

In addition, the present disclosure has an effect of providing an in-vehicle infotainment system that can use existing user experience-based data intactly, even if equipment is replaced, and a method for upgrading the same.

In addition, the present disclosure has an effect of providing an in-vehicle infotainment system for safely storing, transmitting and receiving data by encrypting existing user experience-based data, and a method for upgrading the same.

In addition, the present disclosure has an effect of providing an in-vehicle infotainment system that can use a memory for a longer period of time by dividing a non-replaced memory into a plurality of partitions, and a method for upgrading the same.

Effects that can be obtained in the present disclosure are not limited to the effects mentioned above, and other effects not mentioned will be clearly understood by those of ordinary skill in the art to which the present disclosure belongs from the description below.

### BRIEF DESCRIPTION OF THE DRAWINGS

The accompanying drawings, which are included as a part of the detailed description to facilitate understanding of the present disclosure, provide embodiments of the present disclosure, and explain the technical features of the present disclosure together with the detailed description.
FIG. 1 is a diagram showing a vehicle according to an embodiment of the present disclosure.
FIG. 2 is a control block diagram of a vehicle according to an embodiment of the present disclosure.
FIG. 3 is a control block diagram of an autonomous driving device according to an embodiment of the present disclosure.
FIG. 4 is a signal flow diagram of an autonomous driving vehicle according to an embodiment of the present disclosure.
FIG. 5 is a diagram illustrating the interior of a vehicle according to an embodiment of the present disclosure.
FIG. 6 is a block diagram for explaining an in-vehicle cabin system according to an embodiment of the present disclosure.
FIG. 7 is a diagram for explaining a user's usage scenario according to an embodiment of the present disclosure.
FIG. 8 is a diagram illustrating a vehicle including an in-vehicle infotainment system according to the present disclosure.
FIG. 9 is a diagram illustrating an in-vehicle infotainment system according to the present disclosure.
FIGS. 10, 11A, and 11B are diagrams of a second device and a third device of the present disclosure.
FIG. 12 is a diagram illustrating a structure of a first memory according to the present disclosure.
FIGS. 13 to 16 are diagrams illustrating a method for upgrading an in-vehicle infotainment system according to the present disclosure.
FIG. 17 is a diagram schematically illustrating a method for upgrading an in-vehicle infotainment system according to the present disclosure.
FIGS. 18 to 20 are diagrams illustrating a detailed embodiment of an operation of an in-vehicle infotainment system according to the present disclosure.

### DETAILED DESCRIPTION OF THE PREFERRED EMBODIMENTS

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated. In general, suffixes such as "module" and "unit" may be used to refer to elements or components. Use of such suffixes herein is merely intended to facilitate description of the specification, and the suffixes do not have any special meaning or function. In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

### Driving

### (1) Vehicle exterior

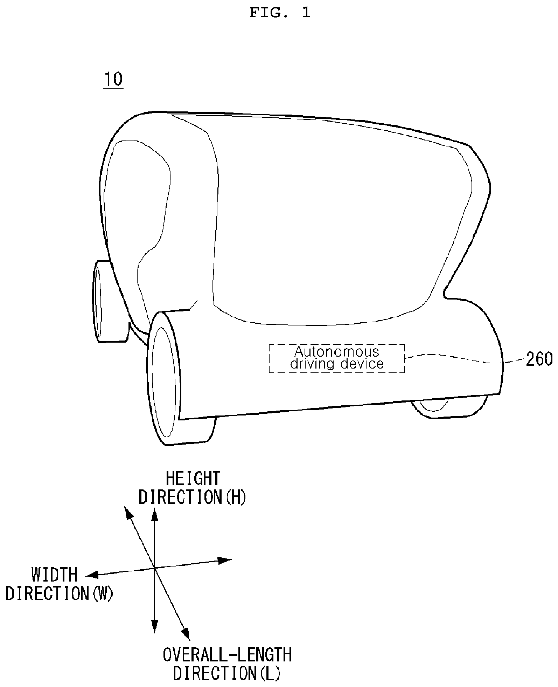

FIG. 1 is a diagram showing a vehicle according to an embodiment of the present disclosure.

Referring to FIG. 1, a vehicle 10 according to an embodiment of the present disclosure is defined as a transportation means driving on a road or track. The vehicle 10 may be a concept including a car, a train, and a motorcycle. The vehicle 10 may be a concept including all of an internal combustion engine vehicle having an engine as a power source, a hybrid vehicle having an engine and an electric motor as a power source, an electric vehicle having an electric motor as a power source, and the like. The vehicle 10 may be a vehicle owned by an individual. The vehicle 10 may be a shared vehicle. The vehicle 10 may be an autonomous driving vehicle.

### (2) Components of vehicle

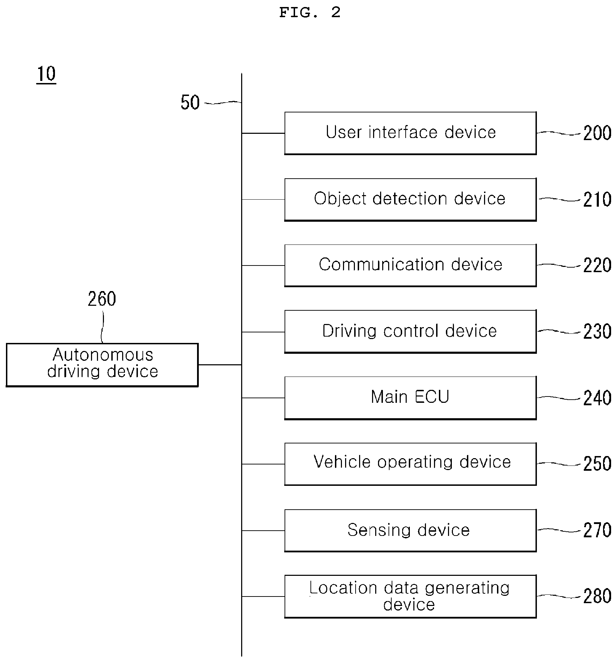

FIG. 2 is a control block diagram of a vehicle according to an embodiment of the present disclosure.

Referring to FIG. 2, the vehicle 10 may include a user interface device 200, an object detection device 210, a communication device 220, a driving control device 230, a main ECU 240, an operating control device 250, an autonomous driving device 260, a sensing device 270, and a location data generating device 280. Each of the object detection device 210, the communication device 220, the driving control device 230, the main ECU 240, the operating control device 250, the autonomous driving device 260, the sensing device 270, and the location data generating device 280 may be implemented as an electronic device that generates an electrical signal, and exchanges electrical signals with each other.

### 1) User interface device

The user interface device 200 is a device for communication between the vehicle 10 and a user. The user interface device 200 may receive a user input, and provide information generated in the vehicle 10 to the user. The vehicle 10 may implement a user interface UI or a user experience UX through the user interface device 200. The user interface device 200 may include an input device, an output device, and a user monitoring device.

### 2) Object detection device

The object detection device 210 may generate information related to an object outside the vehicle 10. The information related to object may include at least one of information related to the existence of object, location information of object, distance information between the vehicle 10 and an object, and relative speed information between the vehicle 10 and an object. The object detection device 210 may detect an object outside the vehicle 10. The object detection device 210 may include at least one sensor capable of detecting an object outside the vehicle 10. The object detection device 210 may include at least one of a camera, a radar, a lidar, an ultrasonic sensor, and an infrared sensor. The object detection device 210 may provide data on an object generated based on a sensing signal generated by a sensor to at least one electronic device included in a vehicle.

### 2.1) Camera

A camera may generate information related to an object outside the vehicle 10 by using an image. The camera may include at least one lens, at least one image sensor, and at least one processor that is electrically connected to the image sensor to process a received signal, and generates data on object, based on the processed signal.

The camera may be at least one of a mono camera, a stereo camera, and an around view monitoring (AVM) camera. The camera may obtain location information of object, distance information from object, or relative speed information with respect to object by using various image processing algorithms. For example, the camera may obtain distance information and relative speed information from object, based on a change in the size of object over time, from the obtained image. For example, the camera may obtain distance information and relative speed information with respect to an object, through a pinhole model, road surface profiling, or the like. For example, the camera may obtain distance information and relative speed information with respect to object, based on disparity information in a stereo image obtained from the stereo camera.

The camera may be mounted in a location where a field of view (FOV) can be secured in a vehicle in order to photograph the outside of vehicle. The camera may be disposed adjacent to a front windshield, in the interior of the vehicle, in order to obtain an image of a forward direction of vehicle. The camera may be disposed around a front bumper or a radiator grill. The camera may be disposed adjacent to a rear glass, in the interior of the vehicle, in order to obtain an image of a rearward direction of vehicle. The camera may be disposed around a rear bumper, a trunk, or a tailgate. The camera may be disposed adjacent to at least one of side windows in the interior of the vehicle in order to obtain an image of the side direction of vehicle. Alternatively, the camera may be disposed around a side mirror, a fender, or a door.

### 2.2) Radar

A radar may generate information related to an object outside the vehicle 10 by using radio waves. The radar may include an electromagnetic wave transmitter, an electromagnetic wave receiver, and at least one processor that is electrically connected to the electromagnetic wave transmitter and the electromagnetic wave receiver, processes a received signal, and generates data about an object, based on the processed signal. The radar may be implemented in a pulse radar method or a continuous wave radar method in terms of a radio wave emission principle. The radar may be implemented in a frequency modulated continuous wave (FMCW) method or a frequency shift keyong (FSK) method according to a signal waveform among continuous wave radar method. The radar may detect an object, based on a time of flight (TOF) method or a phase-shift method, through a medium of electromagnetic wave, and detect a location of the detected object, a distance to the detected object, and a relative speed. The radar may be disposed in a suitable location outside of the vehicle so as to detect an object located in a forward direction, a rearward direction, or a side direction of a vehicle.

### 2.3) Lidar

A lidar may generate information related to an object outside the vehicle 10 by using laser light. The lidar may include a light transmitter, a light receiver, and at least one processor that is electrically connected to the light transmitter and the light receiver, processes a received signal, and generates data about an object based on the processed signal. The lidar may be implemented in a time of flight (TOF) method or a phase-shift method. The lidar may be implemented in a drive type or a non-drive type. When implemented in a drive type, the lidar may be rotated by a motor, and may detect an object around the vehicle 10. When implemented in a non-drive type, the lidar may detect an object located within a certain range based on a vehicle, by light steering. The vehicle 100 may include a plurality of non-drive typed lidars. The lidar may detect an object, based on a time of flight (TOF) method or a phase-shift method, through a medium of laser light, and calculate the location of the detected object, the distance to the detected object, and the relative speed. The lidar may be disposed in a suitable location outside of a vehicle in order to detect an object located in a forward direction, a rearward direction, or a side direction of the vehicle.

### 3) Communication device

The communication device 220 may exchange signals with a device located outside the vehicle 10. The communication device 220 may exchange signals with at least one of an infrastructure (e.g. a server, a broadcasting station), other vehicle, and a terminal. The communication device 220 may include at least one of a transmit antenna, a receive antenna, a radio frequency (RF) circuit capable of implementing various communication protocols, and an RF device in order to perform communication.

Further, the communication device 220 may exchange signals with an external device through a vehicle-to-everything (V2X) communication technology. The V2X communication may be provided through a PC5 interface and/or a Uu interface.

Meanwhile, the next-generation radio access technology may be referred to as a new radio access technology (RAT) or a new radio (NR). Even in NR, vehicle-to-everything (V2X) communication may be supported.

5G NR is a successor technology of LTE-A, and is a new clean-slate type mobile communication system with characteristics such as high performance, low latency, and high availability. 5G NR can utilize all available spectrum resources, from a low frequency band below 1 GHz to an intermediate frequency band of 1 GHz to 10 GHz, and a high frequency (millimeter wave) band of 24 GHz or higher.

For clarity of explanation, LTE-A or 5G NR is mainly described, but the technical spirit of the present disclosure is not limited thereto.

For example, the communication device may exchange signals with an external device based on a cellular V2X (C-V2X) technology. For example, the C-V2X technology may include a LTE-based sidelink communication and/or a NR-based sidelink communication.

For example, the communication device may exchange signals with an external device, based on IEEE 802.11p PHY/MAC layer technology, IEEE 1609 Network/Transport layer technology-based Dedicated Short Range Communications (DSRC) technology, or Wireless Access in Vehicular Environment (WAVE) standard. The DSRC (or WAVE standard) technology is a communication standard prepared to provide an Intelligent Transport System (ITS) service through a short-distance dedicated communication between in-vehicle devices or between a roadside device and an in-vehicle device. The DSRC technology may use a frequency of 5.9 GHz band, and may be a communication method having a data transmission rate of 3 Mbps to 27 Mbps. IEEE 802.11p technology may be combined with IEEE 1609 technology to support the DSRC technology (or WAVE standard).

The communication device of the present disclosure may exchange signals with an external device by using only one of the C-V2X technology or the DSRC technology. Alternatively, the communication device of the present disclosure may exchange signals with an external device by hybridizing the C-V2X technology and the DSRC technology.

### 4) Driving control device

The driving control device 230 is a device that receives a user input for driving. In a manual mode, the vehicle 10 may be operated based on a signal provided by the driving control device 230. The driving control device 230 may include a steering input device (e.g. a steering wheel), an acceleration input device (e.g. an acceleration pedal), and a brake input device (e.g. a brake pedal).

### 5) Main ECU

The main ECU 240 may control the overall operation of at least one electronic device provided in the vehicle 10.

### 6) Operating control device

The operating control device 250 is a device that electrically controls various vehicle operating devices in the vehicle 10. The operating control device 250 may include a power train operating control device, a chassis operating control device, a door/window operating control device, a safety device operating control device, a lamp operating control device, and an air conditioning operating control device. The power train operating control device may include a power source operating control device and a transmission operating control device. The chassis operating control device may include a steering operating control device, a brake operating control device, and a suspension operating control device. Meanwhile, the safety device operating control device may include a safety belt operating control device for seat belt control.

The operating control device 250 includes at least one electronic control device (e.g. a control Electronic Control Unit (ECU)).

The operating control device 250 may control the vehicle operating device, based on a signal received from the autonomous driving device 260. For example, the control device 250 may control a power train, a steering device, and a brake device, based on a signal received from the autonomous driving device 260.

### 7) Autonomous driving device

The autonomous driving device 260 may generate a path for autonomous driving, based on the obtained data. The autonomous driving device 260 may generate a driving plan for driving along the generated path. The autonomous driving device 260 may generate a signal for controlling the movement of the vehicle according to the driving plan. The autonomous driving device 260 may provide the generated signal to the operating control device 250.

The autonomous driving device 260 may implement at least one Advanced Driver Assistance System (ADAS) function. The ADAS may implement at least one of Adaptive Cruise Control (ACC), Autonomous Emergency Braking (AEB), Forward Collision Warning (FCW), Lane Keeping Assist (LKA), Lane Change Assist (LCA), Target Following Assist (TFA), Blind Spot Detection (BSD), High Beam Assist (HBA), Auto Parking System (APS), PD Collision Warning System, Traffic Sign Recognition (TSR), Traffic Sign Assist (TSA), Night Vision (NV), Driver Status Monitoring (DSM), and Traffic Jam Assist (TJA).

The autonomous driving device 260 may perform a conversion operation from an autonomous driving mode to a manual driving mode or a conversion operation from the manual driving mode to the autonomous driving mode. For example, the autonomous driving device 260 may convert the mode of the vehicle 10 from the autonomous driving mode to the manual driving mode or may convert from the manual driving mode to the autonomous driving mode, based on a signal received from the user interface device 200.

### 8) Sensing device

The sensing device 270 may sense the state of the vehicle. The sensing device 270 may include at least one of an inertial measurement unit (IMU) sensor, a collision sensor, a wheel sensor, a speed sensor, an inclination sensor, a weight sensor, a heading sensor, a position module, a vehicle forward/reverse sensor, a battery sensor, a fuel sensor, a tire sensor, a steering sensor, a temperature sensor, a humidity sensor, an ultrasonic sensor, an illuminance sensor, and a pedal position sensor. Meanwhile, the inertial measurement unit (IMU) sensor may include one or more of an acceleration sensor, a gyro sensor, and a magnetic sensor.

The sensing device 270 may generate vehicle state data, based on a signal generated by at least one sensor. The vehicle state data may be information generated based on data detected by various sensors provided inside a vehicle. The sensing device 270 may generate vehicle posture data, vehicle motion data, vehicle yaw data, vehicle roll data, vehicle pitch data, vehicle collision data, vehicle direction data, vehicle angle data, vehicle speed data, vehicle acceleration data, vehicle inclination data, vehicle forward/reverse data, vehicle weight data, battery data, fuel data, tire pressure data, vehicle interior temperature data, vehicle interior humidity data, steering wheel rotation angle data, vehicle exterior illumination data, pressure data applied to an acceleration pedal, pressure data applied to a brake pedal, and the like.

### 9) Location data generating device

The location data generating device 280 may generate location data of the vehicle 10. The location data generating device 280 may include at least one of a Global Positioning System (GPS) and a Differential Global Positioning System (DGPS). The location data generating device 280 may generate location data of the vehicle 10 based on a signal generated in at least one of GPS and DGPS. In some embodiment, the location data generating device 280 may correct location data based on at least one of an Inertial Measurement Unit (IMU) of the sensing device 270 and a camera of the object detection device 210. The location data generating device 280 may be referred to as a Global Navigation Satellite System (GNSS).

The vehicle 10 may include an internal communication system 50. A plurality of electronic devices included in the vehicle 10 may exchange signals through a medium of the internal communication system 50. A signal may contain data. The internal communication system 50 may use at least one communication protocol (e.g. CAN, LIN, FlexRay, MOST, Ethernet).

### (3) Components of autonomous driving device

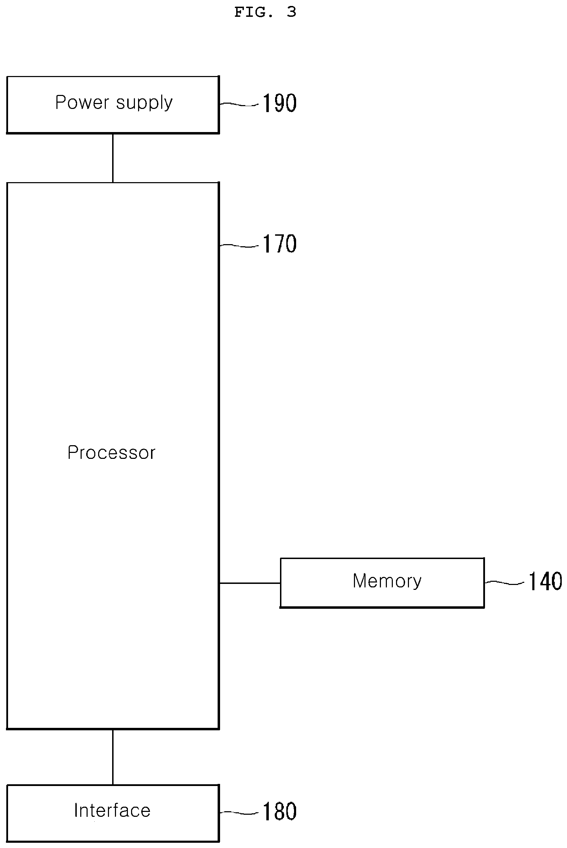

FIG. 3 is a control block diagram of an autonomous driving device according to an embodiment of the present disclosure.

Referring to FIG. 3, the autonomous driving device 260 may include a memory 140, a processor 170, an interface 180, and a power supply 190.

The memory 140 is electrically connected to the processor 170. The memory 140 may store basic data for a device or module, control data for operation control of a device or module, and input/output data. The memory 140 may store data processed by the processor 170. The memory 140 may be configured with at least one of ROM, RAM, EPROM, flash drive, and hard drive, in terms of hardware. The memory 140 may store various data for the overall operation of the autonomous driving device 260, such as a program for processing or controlling the processor 170. The memory 140 may be implemented integrally with the processor 170. In some embodiment, the memory 140 may be classified as a sub-configuration of the processor 170.

The interface 180 may exchange signals with at least one electronic device provided in the vehicle 10 by wire or wirelessly. The interface 280 may exchange signals with at least one of the object detection device 210, the communication device 220, the driving control device 230, the main ECU 240, the operating control device 250, the sensing device 270, and the location data generating device 280, by wire or wirelessly. The interface 280 may be configured with at least one of a communication module, a terminal, a pin, a cable, a port, a circuit, an element, and a device.

The power supply 190 may supply power to the autonomous driving device 260. The power supply 190 may receive power from a power source (e.g. a battery) included in the vehicle 10, and supply power to each device of the autonomous driving device 260. The power supply 190 may be operated according to a control signal provided from the main ECU 240. The power supply 190 may include a switched-mode power supply (SMPS).

The processor 170 may be electrically connected to the memory 140, the interface 280, and the power supply 190 to exchange signals. The processor 170 may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and other electrical devices for performing other functions.

The processor 170 may be operated by power provided from the power supply 190. The processor 170 may receive data, process data, generate a signal, and provide a signal while power is supplied by the power supply 190.

The processor 170 may receive information from other electronic device in the vehicle 10 through the interface 180. The processor 170 may provide a control signal to other electronic device in the vehicle 10 through the interface 180.

The autonomous driving device 260 may include at least one printed circuit board (PCB). The memory 140, the interface 180, the power supply 190, and the processor 170 may be electrically connected to the printed circuit board.

### (4) Operation of autonomous driving device

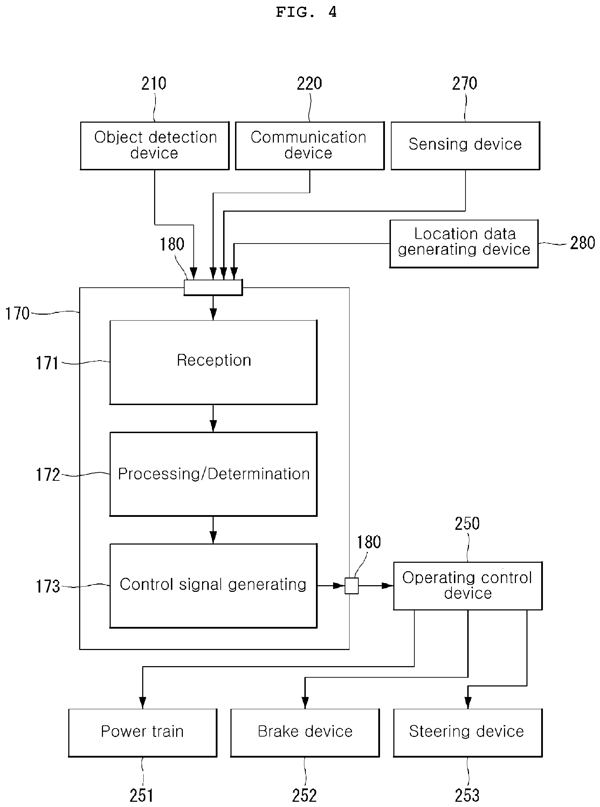

FIG. 4 is a signal flow diagram of an autonomous driving vehicle according to an embodiment of the present disclosure.

### 1) Reception operation

Referring to FIG. 4, the processor 170 may perform a reception operation. The processor 170 may receive data from at least one of the object detection device 210, the communication device 220, the sensing device 270, and the location data generating device 280, through the interface 180. The processor 170 may receive object data from the object detection device 210. The processor 170 may receive HD map data from the communication device 220. The processor 170 may receive vehicle state data from the sensing device 270. The processor 170 may receive location data from the location data generating device 280.

### 2) Processing/Determination operation

The processor 170 may perform a processing/determination operation. The processor 170 may perform a processing/determination operation, based on driving situation information. The processor 170 may perform a processing/determination operation, based on at least one of object data, HD map data, vehicle state data, and location data.

### 2.1) Driving plan data generation operation

The processor 170 may generate driving plan data. For example, the processor 170 may generate electronic horizon data. The electronic horizon data may be understood as driving plan data within a range from a point where the vehicle 10 is located to a horizon. The horizon may be understood as a point in front of a preset distance from a point where the vehicle 10 is located, based on a preset driving route. The horizon may mean a point to which the vehicle 10 can reach after a certain time from a point where the vehicle 10 is located along a preset driving route. The electronic horizon data may include horizon map data and horizon path data.

### 2.1.1) Horizon Map Data

The horizon map data may include at least one of topology data, road data, HD map data, and dynamic data. In some embodiment, the horizon map data may include a plurality of layers. For example, the horizon map data may include a first layer matching topology data, a second layer matching road data, a third layer matching HD map data, and a fourth layer matching dynamic data. The horizon map data may further include static object data.

The topology data can be explained as a map created by connecting road centers. The topology data is suitable for roughly indicating the location of vehicle, and may be in the form of data mainly used in navigation for drivers. The topology data may be understood as data on road information excluding information related to lane. The topology data may be generated based on data received from an external server, through the communication device 220. The topology data may be based on data stored in at least one memory provided in the vehicle 10.

The road data may include at least one of slope data of road, curvature data of road, and speed limit data of road. The road data may further include no-passing zone data. The road data may be based on data received from an external server, through the communication device 220. The road data may be based on data generated by the object detection device 210.

The HD map data may be based on data received from an external server, through detailed topology information of lane unit of road, connection information of each lane, and characteristic information for vehicle localization (e.g. traffic signs, Lane Marking/attributes, Road furniture, etc.). The HD map data may be based on data received from an external server, through the communication device 220.

The dynamic data may include various dynamic information that can be generated on the road. For example, the dynamic data may include construction information, variable speed lane information, road surface condition information, traffic information, moving object information, and the like. The dynamic data may be based on data received from an external server, through the communication device 220. The dynamic data may be based on data generated by the object detection device 210.

The processor 170 may provide map data within a range from a point where the vehicle 10 is located to the horizon.

### 2.1.2) Horizon path data

The horizon path data may be explained as a track that the vehicle 10 can follow within a range from a point where the vehicle 10 is located to the horizon. The horizon path data may include data representing a relative probability of selecting any one road at a decision point (e.g. a forked road, an intersection, crossroads, etc.). The relative probability may be calculated based on a time taken to reach a final destination. For example, at the decision point, if the time taken to reach a final destination in case of selecting a first road is shorter than in case of selecting a second road, the probability of selecting the first road can be calculated higher than the probability of selecting the second road.

The horizon path data may include a main path and a sub path. The main path may be understood as a track connecting roads having a high relative probability of being selected. The sub-path may diverge from at least one decision point on the main path. The sub-path may be understood as a track connecting at least one road having a low relative probability of being selected from at least one decision point on the main path.

### 3) Control signal generation operation

The processor 170 may perform a control signal generation operation. The processor 170 may generate a control signal, based on electronic horizon data. For example, the processor 170 may generate at least one of a power train control signal, a brake device control signal, and a steering device control signal, based on electronic horizon data.

The processor 170 may transmit the generated control signal to the operating control device 250, through the interface 180. The operating control device 250 may transmit a control signal to at least one of the power train 251, the brake device 252, and the steering device 253.

### Cabin

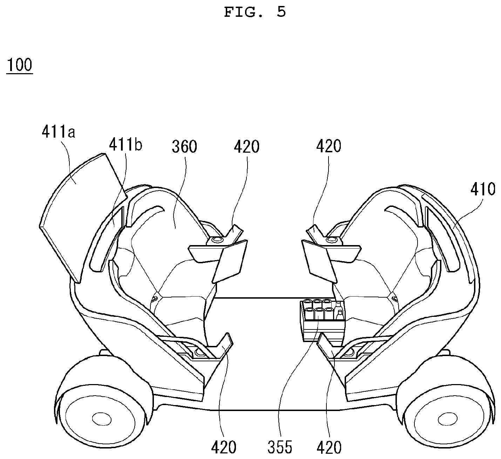

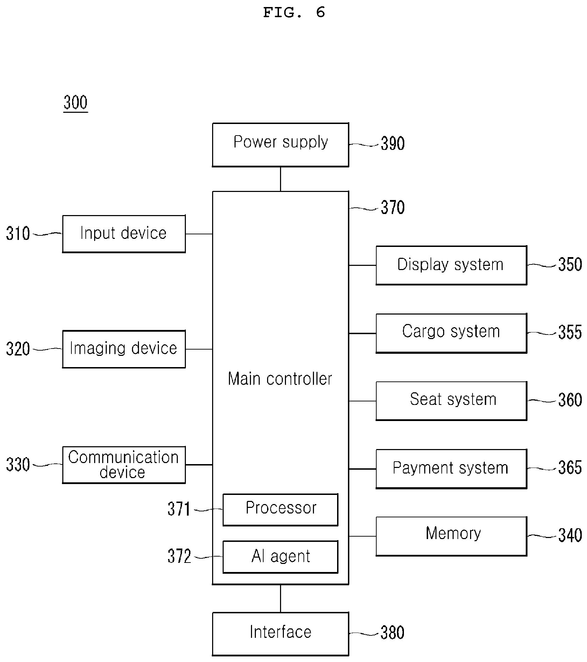

FIG. 5 is a diagram illustrating the interior of a vehicle according to an embodiment of the present disclosure. FIG. 6 is a block diagram for explaining an in-vehicle cabin system according to an embodiment of the present disclosure.

### (1) Components of cabin

Referring to FIGS. 5 to 6, a in-vehicle cabin system 300 (hereinafter, a cabin system) may be defined as a convenience system for a user using the vehicle 10. The cabin system 300 may be described as a top-level system including a display system 350, a cargo system 355, a seat system 360, and a payment system 365. The cabin system 300 may include a main controller 370, a memory 340, an interface 380, a power supply 390, an input device 310, an imaging device 320, a communication device 330, a display system 350, a cargo system 355, a seat system 360, and a payment system 365. In some embodiment, the cabin system 300 may further include other components in addition to the components described in the present disclosure, or may not include some of the components described herein.

### 1) Main controller

The main controller 370 may be electrically connected to the input device 310, the communication device 330, the display system 350, the cargo system 355, the seat system 360, and the payment system 365 to exchange signals. The main controller 370 may control the input device 310, the communication device 330, the display system 350, the cargo system 355, the seat system 360, and the payment system 365. The main controller 370 may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical devices for performing other functions.

The main controller 370 may be configured with at least one sub-controller. In some embodiment, the main controller 370 may include a plurality of sub-controllers. Each of the plurality of sub-controllers may individually control devices and systems included in a grouped cabin system 300. The devices and systems included in the cabin system 300 may be grouped by function, or grouped based on a seatable seat.

The main controller 370 may include at least one processor 371. FIG. 6 illustrates that the main controller 370 includes a single processor 371, but the main controller 371 may include a plurality of processors. The processor 371 may be classified as any one of the sub-controllers described above.

The processor 371 may receive a signal, information, or data from a user terminal, through the communication device 330. The user terminal may transmit a signal, information or data to the cabin system 300.

The processor 371 may specify a user, based on image data received from at least one of an internal camera and an external camera included in the imaging device. The processor 371 may specify a user by applying an image processing algorithm to image data. For example, the processor 371 may specify a user by comparing information received from a user terminal with the image data. For example, the information may include at least one of route information of user, body information, passenger information, luggage information, location information, preferred contents information, preferred food information, disability information, and use history information.

The main controller 370 may include an artificial intelligence agent 372. The artificial intelligence agent 372 may perform machine learning based on data obtained through the input device 310. The artificial intelligence agent 372 may control at least one of the display system 350, the cargo system 355, the seat system 360, and the payment system 365, based on the machine-learned result.

### 2) Essential components

The memory 340 is electrically connected to the main controller 370. The memory 340 may store basic data for device or module, control data for an operation control of device or module, and input/output data. The memory 340 may store data processed by the main controller 370. The memory 340 may be configured with at least one of ROM, RAM, EPROM, flash drive, and hard drive, in terms of hardware. The memory 340 may store various data for the overall operation of the cabin system 300, such as a program for processing or controlling the main controller 370. The memory 340 may be implemented integrally with the main controller 370.

The interface 380 may exchange signals with at least one electronic device provided in the vehicle 10 by wire or wirelessly. The interface 380 may be configured with at least one of a communication module, a terminal, a pin, a cable, a port, a circuit, an element, and a device.

The power supply 390 may supply power to the cabin system 300. The power supply 390 may receive power from a power source (e.g. a battery) included in the vehicle 10 to supply power to each device of the cabin system 300. The power supply 390 may be operated according to a control signal provided from the main controller 370. For example, the power supply 390 may be implemented by a switched-mode power supply (SMPS).

The cabin system 300 may include at least one printed circuit board (PCB). The main controller 370, the memory 340, the interface 380, and the power supply 390 may be mounted in at least one printed circuit board.

### 3) Input device

The input device 310 may receive a user input. The input device 310 may convert a user input into an electrical signal. The electrical signal converted by the input device 310 may be converted into a control signal and provided to at least one of the display system 350, the cargo system 355, the seat system 360, and the payment system 365. At least one processor included in the main controller 370 or the cabin system 300 may generate a control signal based on an electrical signal received from the input device 310.

The input device 310 may include at least one of a touch input device, a gesture input device, a mechanical input device, and a voice input device. The touch input device may convert a user's touch input into an electrical signal. The touch input device may include at least one touch sensor to detect a user's touch input. In some embodiment, the touch input device may be formed integrally with at least one display included in the display system 350 to implement a touch screen. Such a touch screen may provide both an input interface and an output interface between the cabin system 300 and a user. The gesture input device may convert a user's gesture input into an electrical signal. The gesture input device may include at least one of an infrared sensor and an image sensor for detecting a user's gesture input. In some embodiment, the gesture input device may detect a user's 3D gesture input. To this end, the gesture input device may include a light output device that outputs a plurality of infrared rays or a plurality of image sensors. The gesture input device may detect the user's 3D gesture input through a time of flight (TOF) method, a structured light method, or a disparity method. The mechanical input device may convert a user's physical input (e.g. pressing or rotating) through a mechanical device into an electrical signal. The mechanical input device may include at least one of a button, a dome switch, a jog wheel, and a jog switch. Meanwhile, the gesture input device and the mechanical input device may be formed as one body. For example, the input device 310 may include a gesture sensor, and may include a jog dial device formed to be able to put in and out from a part of a surrounding structure (e.g. at least one of a seat, an armrest, and a door). When the jog dial device is in a flat state with a surrounding structure, the jog dial device may serve as a gesture input device. When the jog dial device is in a protruding state in comparison with a surrounding structure, the jog dial device may serve as a mechanical input device. The voice input device may convert a user's voice input into an electrical signal. The voice input device may include at least one microphone. The voice input device may include a beam foaming MIC.

### 4) Imaging device

The imaging device 320 may include at least one camera. The imaging device 320 may include at least one of an internal camera and an external camera. The internal camera may photograph an image inside the cabin. The external camera may photograph an image outside the vehicle. The internal camera may obtain an image in the cabin. The imaging device 320 may include at least one internal camera. It is preferable that the imaging device 320 includes cameras, while the number of cameras corresponds to the number of available passengers. The imaging device 320 may provide an image obtained by an internal camera. At least one processor included in the main controller 370 or the cabin system 300 may detect a user's motion based on the image obtained by the internal camera, generate a signal based on the detected motion, and provide to at least one of the display system 350, the cargo system 355, the seat system 360, and the payment system 365. The external camera may obtain an image outside the vehicle. The imaging device 320 may include at least one external camera. The imaging device 320 preferably includes cameras, while the number of cameras corresponds to the boarding door. The imaging device 320 may provide an image obtained by an external camera. At least one processor included in the main controller 370 or the cabin system 300 may obtain user information, based on an image obtained by an external camera. At least one processor included in the main controller 370 or the cabin system 300 may authenticate a user based on user information, or may obtain body information (e.g. height information, weight information, etc.) of user, passenger information of user, luggage information of user, and the like.

### 5) Communication device

The communication device 330 may wirelessly exchange signals with an external device. The communication device 330 may exchange signals with an external device through a network, or may directly exchange signals with an external device. The external device may include at least one of a server, a mobile terminal, and other vehicle. The communication device 330 may exchange signals with at least one user terminal. The communication device 330 may include at least one of an antenna, a radio frequency (RF) circuit capable of implementing at least one communication protocol, and an RF device to perform communication. In some embodiment, the communication device 330 may use a plurality of communication protocols. The communication device 330 may switch a communication protocol depending on a distance to the mobile terminal.

For example, the communication device may exchange signals with an external device based on a Cellular V2X (C-V2X) technology. For example, the C-V2X technology may include a LTE-based sidelink communication and/or a NR-based sidelink communication.

For example, the communication device may exchange signals with an external device, based on a Dedicated Short Range Communications (DSRC) technology based on IEEE 802.11p PHY/MAC layer technology and IEEE 1609 Network/Transport layer technology or Wireless Access in Vehicular Environment (WAVE) standard. The DSRC (or WAVE standard) technology is a communication standard prepared to provide an Intelligent Transport System (ITS) service through a short-distance dedicated communication between in-vehicle devices or between a roadside device and an in-vehicle device. The DSRC technology may use a frequency of 5.9 GHz band, and may be a communication method having a data transmission rate of 3 Mbps to 27 Mbps. The IEEE 802.11p technology can be combined with IEEE 1609 technology to support the DSRC technology (or WAVE standard).

The communication device of the present disclosure may exchange signals with an external device by using only one of the C-V2X technology or the DSRC technology. Alternatively, the communication device of the present disclosure may exchange signals with an external device by hybridizing the C-V2X technology and the DSRC technology.

### 6) Display system

The display system 350 may display a graphic object. The display system 350 may include at least one display device. For example, the display system 350 may include a publicly available first display device 410 and an individually available second display device 420.

### 6.1) Common Display Devices

The first display device 410 may include at least one display 411 for outputting visual contents. The display 411 included in the first display device 410 may be implemented by at least one of a flat panel display, a curved display, a rollable display, and a flexible display. For example, the first display device 410 may include a first display 411 which is located in the rearward direction of the seat and formed to be able to be put in and out of the cabin, and a first mechanism for moving the first display 411. The first display 411 may be disposed in a slot formed in the seat main frame to be able to be put in and out. In some embodiment, the first display device 410 may further include a flexible area adjustment mechanism. The first display may be formed to be flexible, and a flexible area of the first display may be adjusted depending on the location of a user. For example, the first display device 410 may include a second display which is located on the ceiling in the cabin and formed to be rollable, and a second mechanism for winding or unwinding the second display. The second display may be formed to enable screen output on both sides. For example, the first display device 410 may include a third display which is located on the ceiling in the cabin and formed to be flexible, and a third mechanism for bending or unfolding the third display. In some embodiment, the display system 350 may further include at least one processor that provides a control signal to at least one of the first display device 410 and the second display device 420. The processor included in the display system 350 may generate a control signal based on a signal received from at least one of the main controller 370, the input device 310, the imaging device 320, and the communication device 330.

The display area of the display included in the first display device 410 may be divided into a first area 411a and a second area 411b. The first area 411a may be defined as a contents display area. For example, the first area 411 may display at least one of entertainment contents (e.g. movie, sports, shopping, music, etc.), video conferences, food menus, and graphic objects corresponding to augmented reality screen. The first area 411a may display a graphic object corresponding to driving situation information of the vehicle 10. The driving situation information may include at least one of vehicle outside object information, navigation information, and vehicle state information. The vehicle outside object information may include information relate to the existence of an object, location information of object, distance information between the vehicle 300 and an object, and relative speed information between the vehicle 300 and an object. The navigation information may include at least one of map information, set destination information, route information according to the destination setting, information on various objects on a route, lane information, and current location information of vehicle. The vehicle state information may include vehicle posture information, vehicle speed information, vehicle inclination information, vehicle weight information, vehicle direction information, vehicle battery information, vehicle fuel information, vehicle tire pressure information, vehicle steering information, vehicle interior temperature information, vehicle interior humidity information, pedal position information, vehicle engine temperature information, and the like. The second area 411b may be defined as a user interface area. For example, the second area 411b may output an artificial intelligence agent screen. In some embodiment, the second area 411b may be located in an area classified as the seat frame. In this case, a user may watch the contents displayed in the second area 411b between a plurality of seats. In some embodiment, the first display device 410 may provide holographic contents. For example, the first display device 410 may provide holographic contents for each of a plurality of users so that only a user who requested the contents can watch corresponding contents.

### 6.2) Personal display devices

The second display device 420 may include at least one display 421. The second display device 420 may provide the display 421 at a location where only individual passengers can check the content of display. For example, the display 421 may be disposed in an arm rest of a seat. The second display device 420 may display a graphic object corresponding to user's personal information. The second display device 420 may include displays 421, while the number of displays 421 corresponds to the number of available passengers. The second display device 420 may implement a touch screen, by forming a mutual layer structure with a touch sensor or being formed as one body. The second display device 420 may display a graphic object for receiving a user input of seat adjustment or room temperature adjustment.

### 7) Cargo system

The cargo system 355 may provide goods to a user according to a user's request. The cargo system 355 may be operated based on an electrical signal generated by the input device 310 or the communication device 330. The cargo system 355 may include a cargo box. The cargo box may be hidden in a portion of the bottom of the seat in a state in which the goods are loaded. When an electrical signal based on a user input is received, the cargo box may be exposed to a cabin. A user may select necessary goods from among commodities loaded in the exposed cargo box. The cargo system 355 may include a sliding moving mechanism and a goods pop-up mechanism for exposure of the cargo box according to a user input. The cargo system 355 may include a plurality of cargo boxes to provide various types of goods. In the cargo box, a weight sensor for determining whether to provide for each goods may be built-in.

### 8) Seat system

The seat system 360 may provide a user with a customized seat for user. The seat system 360 may be operated based on an electrical signal generated by the input device 310 or the communication device 330. The seat system 360 may adjust at least one element of the seat, based on the obtained user body data. The seat system 360 may include a user detection sensor (e.g. a pressure sensor) for determining whether a user is seated. The seat system 360 may include a plurality of seats on which a plurality of users can sit individually. Any one of the plurality of seats may be disposed to face at least another one. At least two users inside the cabin can sit facing each other.

### 9) Payment system

The payment system 365 may provide a payment service to a user. The payment system 365 may operate based on an electrical signal generated by the input device 310 or the communication device 330. The payment system 365 may calculate a price for at least one service used by a user, and request that the calculated price be paid.

### (2) Scenarios for using autonomous driving vehicles

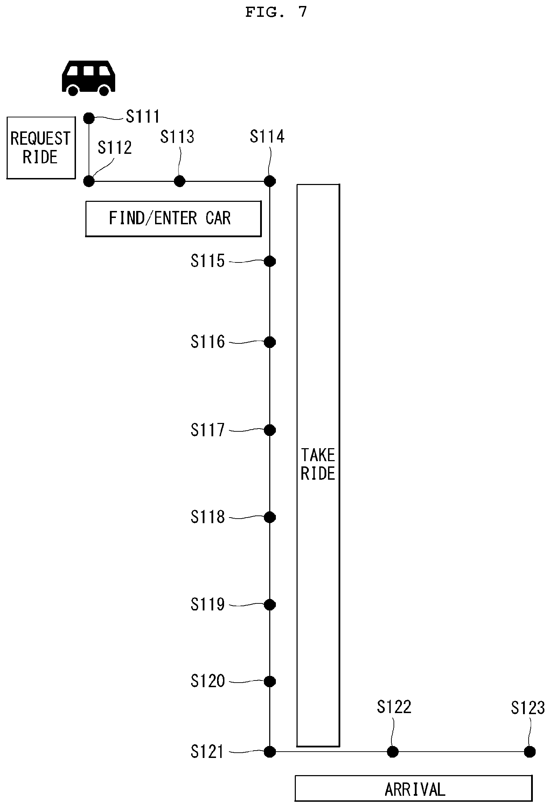

FIG. 7 is a diagram for explaining a user's usage scenario according to an embodiment of the present disclosure.

### 1) Destination prediction scenario

A first scenario (S111) is a user's destination prediction scenario. A user terminal may install an application capable of interworking with the cabin system 300. The user terminal may predict the destination of a user, based on user's contextual information through the application. The user terminal may provide vacancy information in the cabin through the application.

### 2) Cabin interior layout preparation scenario

The second scenario S112 is a cabin interior layout preparation scenario. The cabin system 300 may further include a scanning device for obtaining data about a user located outside the vehicle 300. The scanning device may scan a user to obtain user's body data and baggage data. The user's body data and the baggage data may be used to set a layout. The user's body data may be used for user authentication. The scanning device may include at least one image sensor. The image sensor may obtain a user image by using light of a visible light band or an infrared band.

The seat system 360 may set a layout inside the cabin, based on at least one of the user's body data and the baggage data. For example, the seat system 360 may prepare a space for loading luggage or a space for installing a car seat.

### 3) User welcome scenario

A third scenario (S113) is a user welcome scenario. The cabin system 300 may further include at least one guide light. The guide light may be disposed on the floor inside the cabin. The cabin system 300 may output a guide light so that a user is seated on a preset seat among a plurality of seats, when the user's boarding is detected. For example, the main controller 370 may implement a moving light by sequentially lighting a plurality of light sources according to time from an opened door to a preset user seat.

### 4) Seat adjustment service scenario

A fourth scenario (S114) is a seat adjustment service scenario. The seat system 360 may adjust at least one element of a seat matching the user, based on the obtained body information.

### 5) Personal contents provision scenario

A fifth scenario (S115) is a personal contents provision scenario. The display system 350 may receive user personal data, through the input device 310 or the communication device 330. The display system 350 may provide contents corresponding to the user personal data.

### 6) Goods offering scenario

A sixth scenario (S116) is a goods provision scenario. The cargo system 355 may receive user data through the input device 310 or the communication device 330. The user data may include preference data of user and destination data of user. The cargo system 355 may provide goods, based on the user data.

### 7) Payment scenario

A seventh scenario (S117) is a payment scenario. The payment system 365 may receive data for price calculation from at least one of the input device 310, the communication device 330, and the cargo system 355. The payment system 365 may calculate vehicle usage price of user, based on the received data. The payment system 365 may request payment of a fee from a user (e.g. user's mobile terminal) at the calculated price.

### 8) User's display system control scenario

An eighth scenario (S118) is a user's display system control scenario. The input device 310 may receive a user input formed in at least one type, and convert it into an electrical signal. The display system 350 may control displayed contents, based on the electrical signal.

### 9) AI agent scenario

A ninth scenario (S119) is a multi-channel artificial intelligence (AI) agent scenario for a plurality of users. The artificial intelligence agent 372 may classify a user input for each of a plurality of users. The artificial intelligence agent 372 may control at least one of the display system 350, the cargo system 355, the seat system 360, and the payment system 365, based on an electrical signal which is obtained by converting the individual user input for a plurality of user.

### 10) Multimedia contents provision scenario for a plurality of users

A tenth scenario (S120) is a multimedia contents provision scenario targeting a plurality of users. The display system 350 may provide contents that all users can watch together. In this case, the display system 350 may individually provide the same sound to a plurality of users through speakers provided for each seat. The display system 350 may provide contents that can be individually watched by a plurality of users. In this case, the display system 350 may provide individual sound through a speaker provided for each seat.

### 11) User safety securing scenario

An eleventh scenario (S121) is a user safety securing scenario. When obtaining information related to objects around vehicle that threatens a user, the main controller 370 may control an alarm for objects around vehicle to be output, through the display system 350.

### 12) Scenarios to prevent loss of belongings

A twelfth scenario (S122) is a scenario for preventing loss of a user's belongings. The main controller 370 may obtain data about the user's belongings, through the input device 310. The main controller 370 may obtain user's movement data, through the input device 310. The main controller 370 may determine whether a user leaves the belongings to get off a vehicle, based on belongings data and movement data. The main controller 370 may control an alarm related to belongings to be output, through the display system 350.

### 13) Get-off report scenario

A thirteenth scenario S123 is a get-off report scenario. The main controller 370 may receive user's get-off data, through the input device 310. After the user gets off, the main controller 370 may provide report data according to getting off to user's mobile terminal, through the communication device 330. The report data may include total vehicle usage fee data.

### In-vehicle infotainment system and vehicle including the same

Hereinafter, an in-vehicle infotainment system and a vehicle including the same according to a first preferred embodiment of the present disclosure will be described in detail as follows.

In addition, the in-vehicle infotainment system according to the first preferred embodiment of the present disclosure may include an in-vehicle infotainment system that can be replaced in a detachable manner.

The vehicle described in the present disclosure may be a concept including all of an internal combustion engine vehicle having an engine as a power source, a hybrid vehicle having an engine and an electric motor as a power source, and an electric vehicle having an electric motor as a power source.

The memory described in the present disclosure may store a plurality of application programs (or applications) operated in the in-vehicle infotainment system, data for operation of the system, and instructions. At least some of these application programs may be downloaded from an external server through wireless communication. Meanwhile, the application program may be stored in the memory, installed in the system, and operated by SoC.

The memory described in the present disclosure may include a storage medium of at least one type of a flash memory type, a hard disk type, a solid state disk type (SSD), a silicon disk drive type (SDD), a multimedia card micro type, card type memory **(e.g.** SD or XD memory), random access memory (RAM), static random access memory (SRAM), read-only memory (ROM), electrically erasable programmable read-only memory (EEPROM), a programmable read-only memory (PROM), a magnetic memory, a magnetic disk, and an optical disk.

The SoC described in the present disclosure may include a processor. The processor is a component capable of performing calculations and controlling other devices. Mainly, it may mean a central processing unit (CPU), an application processor (AP), a graphics processing unit (GPU), or the like. In addition, the CPU, AP, or GPU may include one or more cores therein, and the CPU, AP, or GPU may operate by using an operating voltage and a clock signal. However, the CPU or AP may consist of a few cores optimized for serial processing, whereas the GPU may consist of thousands of smaller and more efficient cores designed for parallel processing.

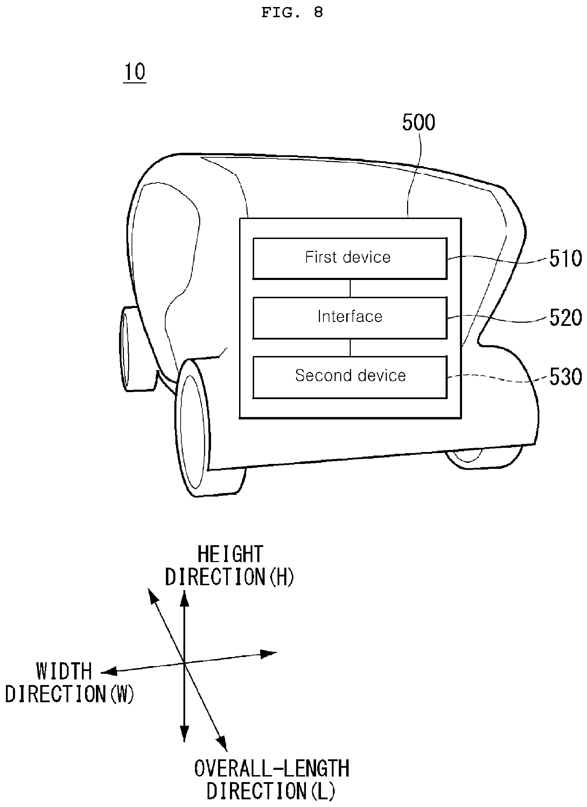

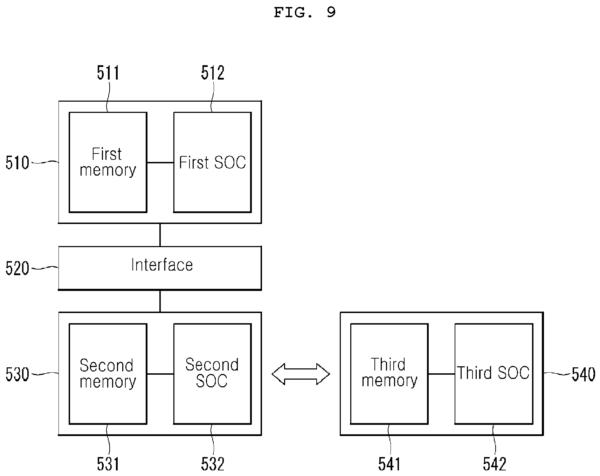

FIG. 8 is a diagram illustrating a vehicle including an in-vehicle infotainment system according to the present disclosure, and FIG. 9 is a diagram illustrating an in-vehicle infotainment system according to the present disclosure.

Referring to FIG. 8, the vehicle 10 according to the present disclosure may include an in-vehicle infotainment system 500. The in-vehicle infotainment system 500 may include a first device 510, an interface 520, and a second device 530.

Referring to FIG. 9, the in-vehicle infotainment system 500 according to the present disclosure may further include a third device 540. The second device 530 and the third device 540 may be replaced with each other.

The first device 510 may include a first memory 511 and a first SoC 512. The first device 510 may mean a vehicle 10 itself, or may mean an apparatus including the system 500 for controlling the vehicle 10. In the present disclosure, the first device 510 may mean a vehicle 10 itself, or an apparatus that is included in the vehicle 10 and cannot be easily replaced.

The second device 530 may include a second memory 531 and a second SoC 532. The second device 530 may be replaced in a detachable manner. The second device 530 may be removed from the vehicle 10, and the third device 540 may be mounted in the vehicle 10. The first device 510 and the second device 530 or the third device 540 may be electrically connected to each other.

The third device 540 may include a third memory 541 and a third Soc 542. The performance of the third device 540 may be higher than that of the second device 530. For example, the clock of the third SoC 542 may be higher than the clock of the second SoC 532, or the capacity of the third memory 541 may be greater than the capacity of the second memory 531. As such, a user may upgrade the infotainment system 500 of vehicle 10 by replacing the second device 530 with the third device 540. However, the present disclosure does not include only an upgrade case, but may include a device replacement scenario.

The interface 520 is configured to connect the first device 510 and another device. The interface 520 transmits/receives data between the first device 510 and other device, and interfaces of various standards may be applied for more efficient transmission/reception.

In data transmission/reception, the in-vehicle infotainment system 500 according to the present disclosure may utilize an encryption means. In addition, the in-vehicle infotainment system 500 according to the present disclosure may transmit/receive data according to various encryption standards.

Security may be important for user-customized data, or the like which may include personal information. Accordingly, when the first device 510 and other devices store data or transmit/receive data, security may be improved through an encryption process.

For example, when a user profile is input to the second device 530, the second device 530 may perform a process of encrypting the user profile. The second device 530 may use an encryption system included in its own OS to encrypt the user profile and store it in the second memory 531. In addition, the second device 530 may encrypt the user profile by using an encryption system included in the vehicle 10 or the first device 510 and store it in the second memory 531.

For example, when a user profile is encrypted and stored in the second memory 531, the encrypted file stored in the second memory 531 may be decrypted by using an encryption system. The second SoC 532 of the second device 530 may re-encrypt the user profile in order to transmit the user profile to the first device 510. This is to prevent security accidents that may occur during data transmission. The encryption method used at this time may be an encryption method using a random number. In this case, the user-customized data may be generated when a user uses the second device 530 or an application installed in the second device 530. The first device 510 may decrypt the encrypted data by using a decryption key for the random number. The first device 510 may encrypt the decrypted user profile by using an encryption system included in its own OS, and store it in the first memory 511.

In addition, the above examples are described based on the second device 530, but the above examples may be identically applied to the third device 540 or other device.

In addition, the above examples have been described on the assumption that data is transmitted from the second device 530 to the first device 510, but conversely, the above examples may be identically applied to a case in which data is transmitted from the first device 510 to another device.

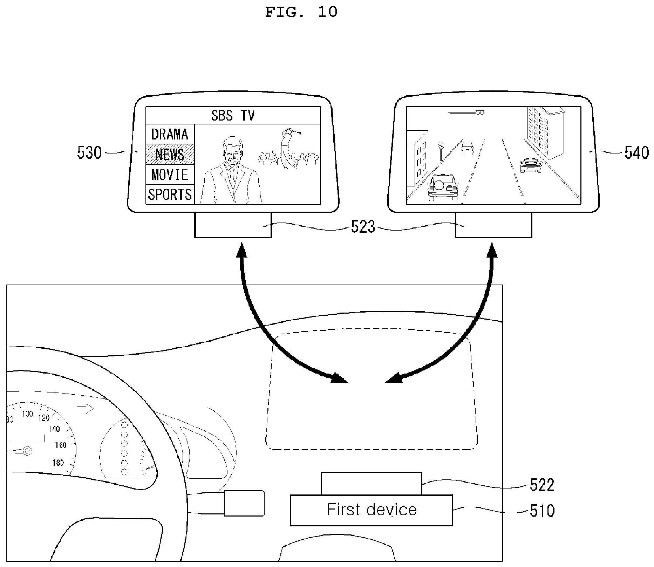

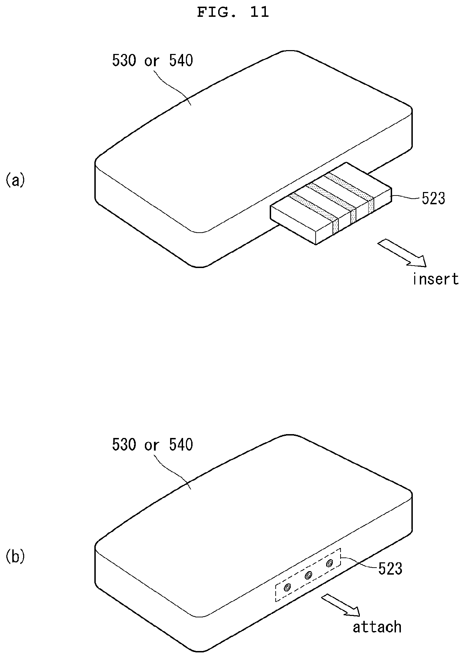

FIGS. 10 and 11 are diagrams of a second device and a third device of the present disclosure.

Referring to FIG. 10, the second device 530 and the third device 540 may be connected to a second connecting portion 523, respectively. A first connecting portion 522 may be electrically connected to a first connecting portion 522 connected to the vehicle 10 or the first device 510. That is, the interface 520 may include the first connecting portion 522 and the second connecting portion 523, the first connecting portion 522 may be connected to the first device 510, and the second connecting portion 523 may be connected to the second device 530 and/or the third device 540. In addition, the first connecting portion 522 and the second connecting portion 523 may be electrically connected to transmit/receive data, and at this time, data may be encrypted and transmitted/received.

The second device 530 and the third device 540 may receive first data from the first device 510, and execute an application based on the received first data. The application executed by the third device 540 may be stored in the third memory 541 of the third device 540.

For example, application A may be installed in the second device 530 and a user of the vehicle 10 may use the application A, thereby generating first data including user-customized data. The generated first data may be transmitted to the first device 510, and stored in the first device 510. Thereafter, the second device 530 may be replaced with the third device 540. The replaced third device 540 may receive first data including user-customized data from the first device 510. The third device 540 may execute an application based on the user-customized data of the received first data. Since the application executed in the third device 540 is executed based on the first data, not only the application data such as settings used by a user in the second device 530, but also user-customized data such as user information can be fetched intactly. Through this, a user can also feel the user experience that is used in the second device 530, in the third device 540. Application data is data generated by the execution of a first application, and may be a type of user-customized data. The first application may temporarily back up the files used during a first execution in memory, and may perform faster execution by fetching again the temporarily backed up files during a second execution. Application data may mean data stored in a kind of cache memory.

As another example, login information of the first application of the second device 530 or a user profile may also be fetched from the third device 540, and the second application of the third device 540 may log in by using the login information or the user profile.

The in-vehicle infotainment system according to the present disclosure may include the first device 510 which is included in the vehicle 10 and includes the first memory 511, the second device 530 which is electrically connected to the first device 510, detachable from the vehicle 10, and includes the second memory 531, and the interface 520 electrically connecting the first device 510 and the second device 530.

The first memory 511 may store first data including user-customized data, and the second device 530 may execute the first application based on the first data. In this case, the first application may be stored in the second memory 531. That is, the first data may be generated by executing the first application of the second device 530, and the first application may be stored in the second memory 531, and may be executed based on the first data of the first memory 511.

In this case, the second device 530 may be replaced with the third device 540, and the second application installed in the third device 540 may be stored in the third memory 541. The second application of the third device 540 may be executed based on the first data of the first memory 511. The third device 540 may directly fetch the first data from the first memory 511 to execute the second application, and the third device 540 may also fetch and store the first data into the third memory 541, and execute the second application based on the first data stored in the third memory 541.

Referring to FIGS. 11A and 11B, the second device 530 or the third device 540 may be connected to the second connecting portion 523, and the second connecting portion 523 may have various types of interfaces. That is, the second connecting portion 523 may be inserted into the first connecting portion 522 in the form of an insertion terminal, or may be attached to the first connecting portion 522 in the form of a contact terminal. However, this is an example and the scope of the present disclosure is not limited thereto.

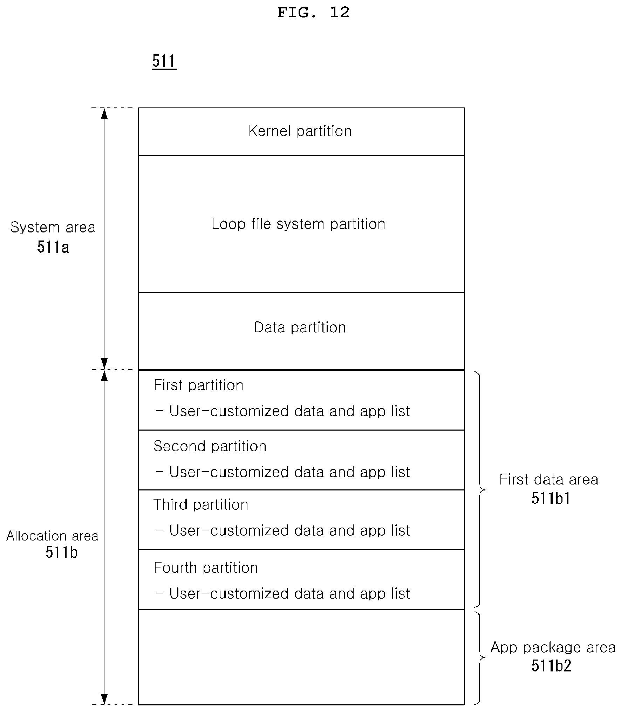

FIG. 12 is a diagram illustrating a structure of a first memory according to the present disclosure.

Referring to FIG. 12, the first memory 511 according to the present disclosure may be divided into a system area 511a and an allocation area 511b. However, the areas according to a corresponding drawing may not mean a physical division, but may mean a set of memory cells. That is, the first memory 511 may store the first data including user-customized data.

Referring to FIG. 12, the system area 511a may include a kernel partition, a loop file system partition, and a data partition. That is, the system area 511a may mean a set of memory cells related to the operation of the system 500. Accordingly, even when an application (or an app package) is installed, data stored in the system area 511a is not changed. The kernel partition may be an area in which a kernel is stored, the loop file system partition may be an area in which a loop file for a system is stored, and the data partition may be an area in which system data is stored.

Referring to FIG. 12, the first memory 511 according to the present disclosure may be divided into a plurality of partitions. In particular, the allocation area 511b may be divided into a plurality of partitions, and first data including the user-customized data and the application list may be stored in each partition.

The user-customized data may include the user information or the user profile. The user-customized data may be data including the record of a user who uses an application, a propensity of the user, and the like. The user-customized data may mean all data generated by the user's use of the application.

The application list may be a list of applications installed in the second device 530. The application list may be a list listing all applications installed in the second device 530. The application list may be transmitted to the third device 540, and the third device 540 may compare the installed applications with the received application list. The third device 540 may download an application that exists in the application list but is not currently installed from an external device or may receive and install it. In this case, the external device may be an external server.

Referring to FIG. 12, first data area 511b1 may be divided into first to fourth partitions. The number of partitions is just an example, and may be adjusted if necessary. The first partition may store first data, and the first data may be alternately stored in a plurality of partitions included in the first data area 511b1.

For example based on the first data being stored in the first partition, the first data for the next device may be stored in the second partition. Next first data may be stored in the third partition. As such, a plurality of partitions are alternately used to increase the lifespan of the memory. When the first data are alternately stored in a plurality of partitions, the first data may be encrypted and stored. Since the encrypted storage method is the same as or overlapping with the above-description, it is omitted.

Referring to FIG. 12, the allocation area 511b may further include an app package area 511b2. The app package area 511b2 may be a memory area in which an application represented by an APK file is installed. As such, more efficient memory utilization is possible and the lifespan of the memory can be increased by separating the app package area 511b2 and the first data area 511b1.

### Method for upgrading an in-vehicle infotainment system

Hereinafter, a method for upgrading an in-vehicle infotainment system according to a second preferred embodiment of the present disclosure based on the above-descriptions will be described in detail as follows.

The second preferred embodiment of the present disclosure may be described in terms of the in-vehicle infotainment system or the first device 510 included in the vehicle, but is not limited thereto.

Hereinafter, among the second preferred embodiments of the present disclosure, the same as or overlapping with the above-described first embodiment may be omitted for convenience.

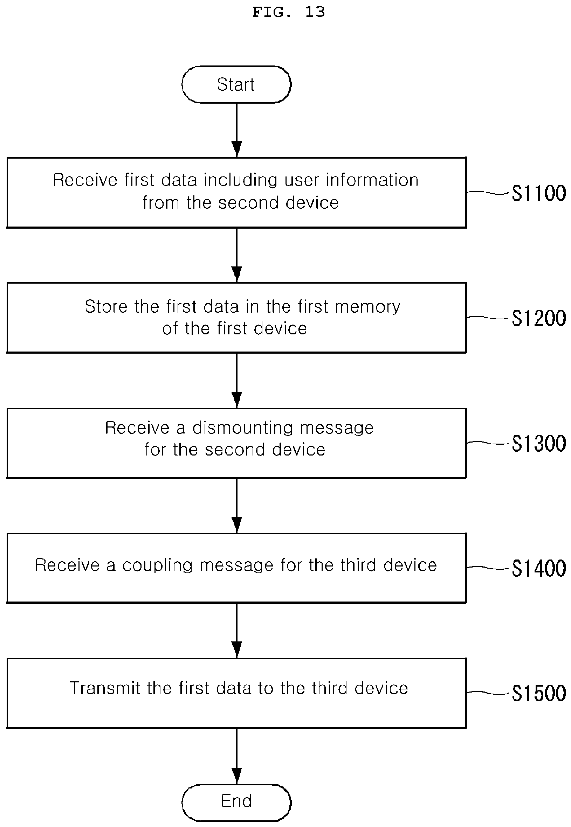

FIGS. 13 to 16 are diagrams illustrating a method for upgrading an in-vehicle infotainment system according to the present disclosure.

Referring to FIG. 13, the upgrading method according to the present disclosure may be a method for upgrading an in-vehicle infotainment system by replacing the second device mounted in the vehicle 10 including the first device with the third device.

The upgrade method according to the present disclosure may include a step (S1100) of receiving first data including user information from the second device 530, a step (S1200) of storing the received first data in the first memory 511 of the first device 510, a step (S1300) of receiving a dismounting message for the second device 530, a step (S1400) of receiving a coupling message for the third device 540, and a step (S1500) of transmitting the first data to the third device 540.

The dismounting message is a message (or signal) that is generated when it is detected that the second device 530 is connected (or mounted) with the interface 520 or the first device 510 and then the connection (or mounting) is disconnected. The dismounting message may be transmitted from the interface 520 to the first device 510. Alternatively, the dismounting message may be transmitted to the first device 510.

The coupling message may be a message (or a signal) that is generated when it is detected that the second device 530 or the third device 540 is connected to the interface 520 or the first device 510. The coupling message may be transmitted from the interface 520 to the first device 510. Alternatively, the coupling message may be transmitted from the third device 540 to the first device 510. Alternatively, the coupling message may be transmitted to the first device 510.

In this case, the third device 540 may execute the second application based on the first data, and a description thereof will be omitted below because it is the same as or overlaps with the above description.

In addition, the first memory 511 may store first data, the first memory 511 may include a plurality of partitions, and the first data may be alternately stored in the plurality of partitions. A description thereof will be omitted below because it is the same as or overlaps with the above description.

In addition, the first data may include application data or application list information received from the second device 530, and the application list information may mean a list of a plurality of applications installed in the second device 530. A description thereof will be omitted below because it is the same as or overlaps with the above description.

In addition, the first data may be encrypted and stored in the memory, and the first data may be encrypted and transmitted/received to and from the second device 530 and/or the third device 540. In this case, since the description of encrypted storage and encrypted transmission/reception is the same as or overlap with the description in the first embodiment, it will be omitted.

The third device 540 may receive the third application from an external server based on the application list information, install the third application in the third memory 541 based on the received file, and execute the third application. That is, the third application may mean an application that is installed in the second device but not installed in the third device 540.

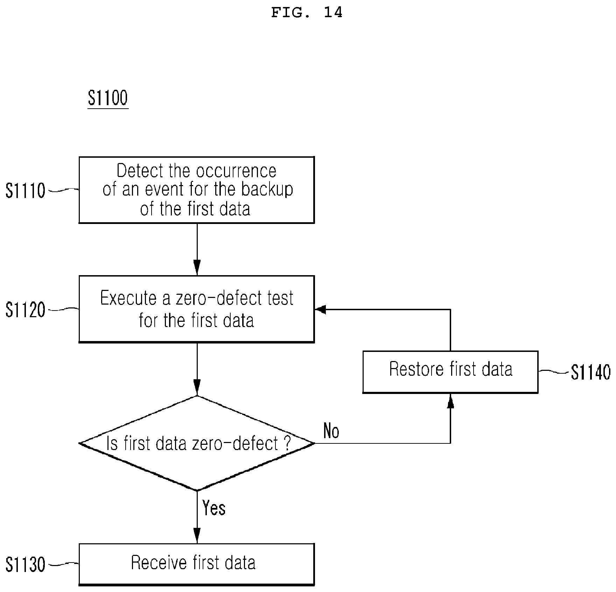

Referring to FIG. 14, the step (S1100) of receiving the first data including the user information from the second device 530 according to the present disclosure may include a step (S1110) of detecting the occurrence of an event for the backup of the first data, and a step (S1120) of executing a zero-defect test for the first data. As a result of the zero-defect test execution based on the first data being zero-defect, the first data may be received (S1130). Conversely, if the first data is not zero-defect as a result of the zero-defect test execution, the first data may be restored (S1140). After the recovery of the first data, it may return to the step (S1120) of executing a zero-defect test for the first data. In this case, when an event for backup occurs, the first data may be stored in the first memory 511.

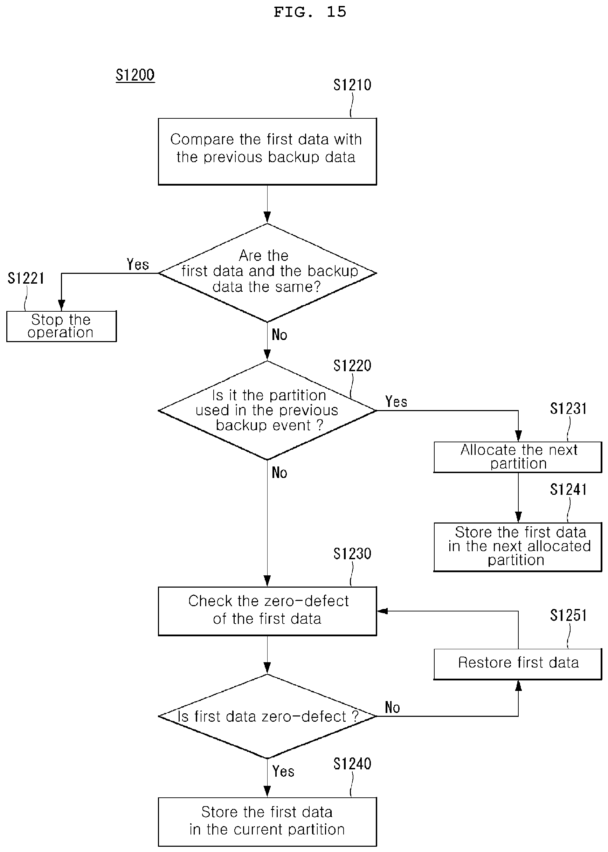

Referring to FIG. 15, a step (S1200) of storing the received first data in the first memory 511 of the first device 510 according to the present disclosure may include a step (S1210) of comparing the first data with previous backup data, and a step (S1221) of stopping the operation when the first data and the backup data are the same.

Referring to FIG. 15, the step (S1200) of storing the received first data in the first memory 511 of the first device 510 according to the present disclosure may further include a step (S1210) of comparing the first data with the previous backup data, a step (S1220) of checking whether the partition to store the first data is the same as the partition used in the previous backup event, if the first data and the backup data are not the same, a step (S1231) of allocating the next partition, if both partitions are not identical, as a result of the check, and a step (S1241) of storing the first data in the next allocated partition.

Referring to FIG. 15, the step (S1200) of storing the received first data in the first memory 511 of the first device 510 according to the present disclosure may further include a step (S1230) of checking the zero-defect of the first data when both partitions are not identical as a result of the check, and a step (S1240) of storing the first data in the current partition of the first memory 511 when the first data is zero-defect.

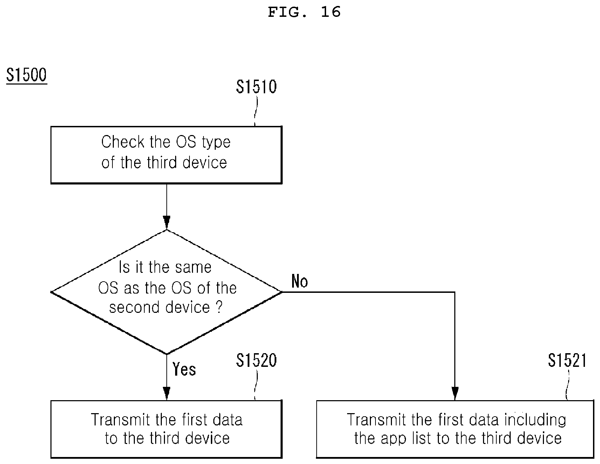

Referring to FIG. 16, a step (S1500) of transmitting the first data to the third device 540 according to the present disclosure may include a step (S1510) of checking the OS type of the third device 540, and a step (S1520) of transmitting the first data to the third device 540, when the OS of the second device 530 and the OS of the third device 540 are the same OS, as a result of the check.

Referring to FIG. 16, when the OS of the second device 530 and the OS of the third device 540 are not the same as a check result, a step (S1521) of transmitting the first data including the application list to the third device 540 may be further included. In this case, the fact that the OSs are not the same may mean that the types of the OS are different from each other. For example, when the OS of the second device 530 is an Android-based OS and the OS of the third device 540 is an IOS, they may be regarded as a different OS. As another example, when the OS of the second device 530 is the Android-based version A and the OS of the third device 540 is the Android-based version B, it may be different depending on the difference in versions, but in general, it would be preferable to see it as a different OS.

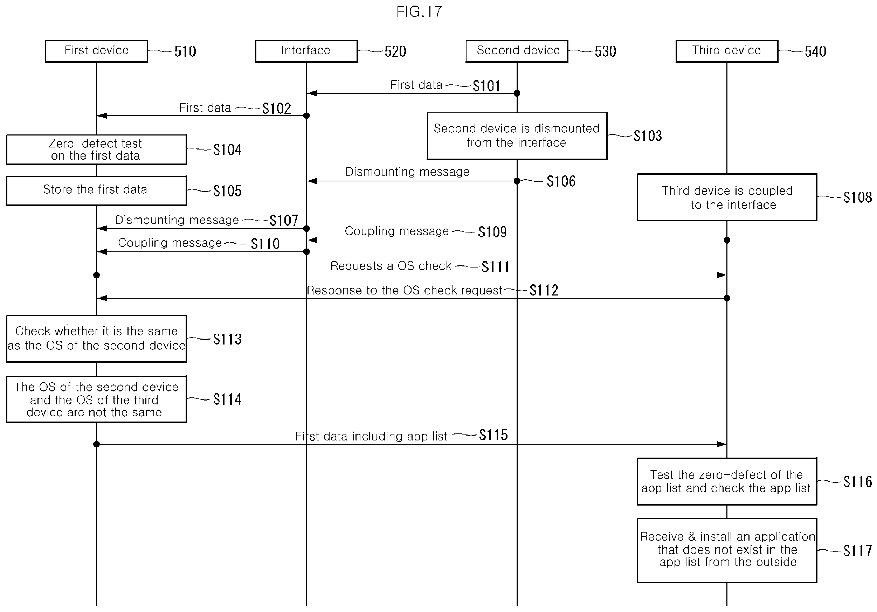

FIG. 17 is a diagram schematically illustrating a method for upgrading an in-vehicle infotainment system according to the present disclosure.

Referring to FIG. 17, the second device 530 may transmit the first data to the interface 520 (S101), and the interface 520 may transmit the first data to the first device 510 (S102). The second device 530 may be dismounted from the interface 520 (S103), the second device 530 may transmit a dismounting message to the interface 520 (S106), and the interface 520 may transmit a dismounting message to the first device 510 (S107).

Referring to FIG. 17, the first device 510 may perform a zero-defect test on the transmitted first data (S104), and then store the zero-defect first data (S105). The third device 540 may be coupled to the interface 520 from which the second device 530 is dismounted (S108), the third device 540 may transmit a coupling message to the interface 520 (S109), and the interface 520 may transmit a coupling message to the first device 510 (S110).

Referring to **FIG.** 17, the first device requests a OS check from the third device 540 (S111), and the third device 540 may transmit a response to the OS check request to the first device 510 (S112). The first device 510 may check whether the OS of the second device 530 and the OS of the third device 540 are the same OS based on the response (S113), and if it is determined that both OSs are not identical to each other (S114), the first device 510 may transmit the first data including the application list to the third device 540.

In addition, the third device 540 may test the zero-defect of the first data including the application list and compare the application in the application list with the installed application (S116). As a result, the third device 540 may request an application that does not exist in the application list to the outside, and receive it from the outside and install it.

In addition, unlike FIG. 17, when the OS of the second device 530 and the OS of the third device 540 are identical to each other, the first device 510 may transmit the first data to the third device 540.

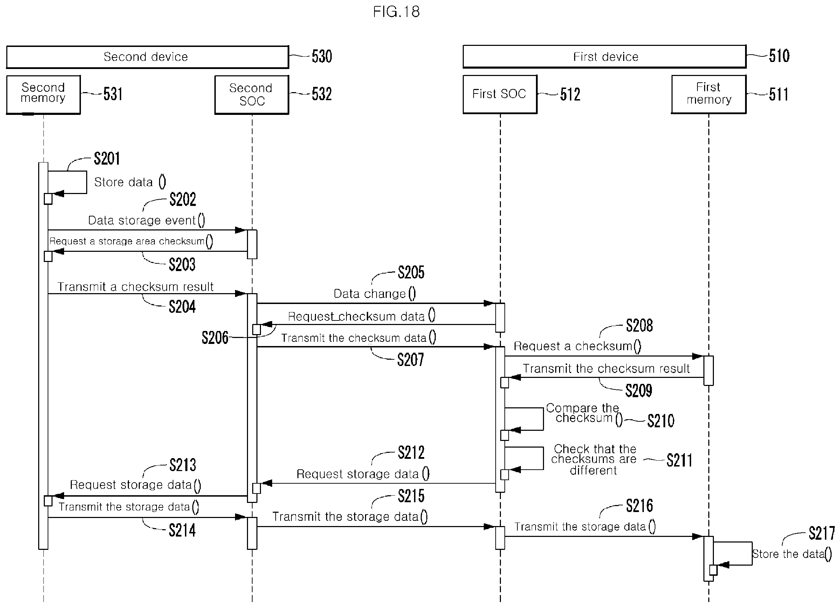

FIGS. 18 to 20 are diagrams illustrating a detailed embodiment of an operation of an in-vehicle infotainment system according to the present disclosure.

In the present disclosure, a checksum is a form of redundancy check, and may mean a method of protecting the zero-defect of transmitted data in space (electronic communication) or time (storage device) through error correction. In addition, the checksum data may mean data generated as a result of performing checksum.

FIG. 18 is a diagram illustrating an example of an in-vehicle infotainment system according to the present disclosure.

Referring to FIG. 18, the second memory 531 of the second device 530 according to the present disclosure may store data (S201) and transmit the occurrence of a data storage event to a second SoC 532 (S202). The second SoC 532 may request a storage area checksum from the second memory 531 (S203). According to the request, the second memory 531 may transmit a checksum result to the second SoC 532 (S204).

Referring to FIG. 18 , the second SoC 532 may request a data change from the first SoC 512 of the first device 510 (S205). In this case, the first SoC 512 may request checksum data from the second SoC 532 (S206), and accordingly, the second SoC 532 may transmit the checksum data to the first SoC 512 (S207). In addition, the first SoC 512 may request a checksum from the first memory 511 (S208), and the first memory 511 may transmit the checksum result to the first SoC 512.

Referring to FIG. 18, the first SoC 512 compares the checksum received from the second device 530 with the checksum received from the first memory 511 (S210), and as a result, checks that the checksums are different from each other (S211), and accordingly, the first SoC 512 may request storage data from the second SoC 532 (S212). The second SoC 532 may request storage data from the second memory 531 (S213), and the second memory 531 may transmit the storage data to the second SoC 532 (S214). The second SoC 532 transmits the storage data to the first SoC 512 (S215), the first SoC 512 transmits the storage data to the first memory 511 (S216), and the first memory (S216) 511) may store the transmitted data (S217).

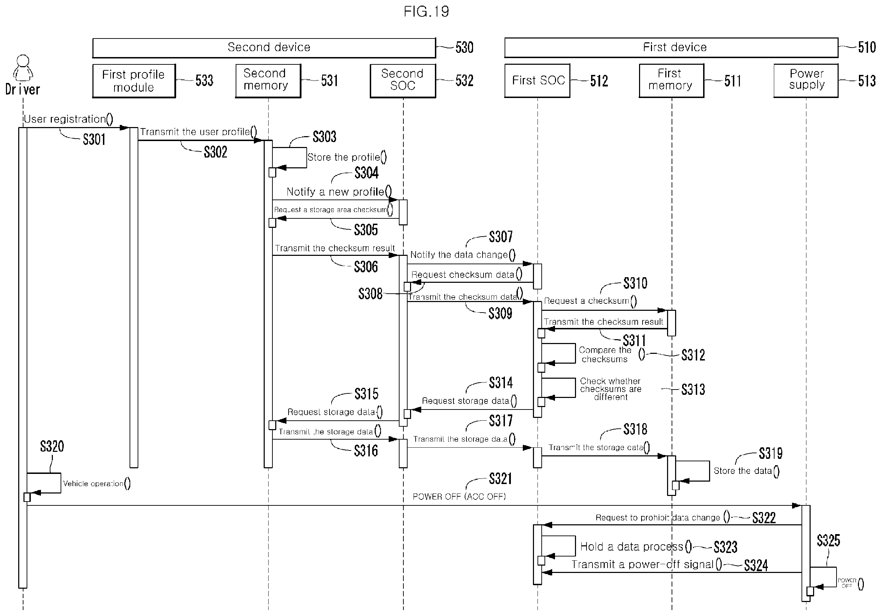

FIG. 19 is a diagram illustrating another example of an in-vehicle infotainment system according to the present disclosure.

Referring to FIG. 19, the second device 530 may further include a first profile module 533, and the first device 510 may further include a power supply 513. The first profile module 533 may receive user information from a user, and generate a user profile in which the user is registered based on the user information. The power supply 513 may be a device for supplying power to all components, and may be provided in the first device 510 or the vehicle 10.

Referring to FIG. 19, the first profile module 533 receives user information from a user (S301), the first profile module 533 transmits the user profile to the second memory 531 (S302), and the second memory 531 may store the user profile (S203). The second memory 531 may notify the second SoC 532 that a new user profile is stored (S304), and the second SoC 532 may request a storage area checksum from the second memory 531 (S305). The second memory 531 may transmit the checksum result to the second SoC 532 (S306).

Referring to **FIG.** 19, the second SoC 532 may notify the data change to the first SoC 512 of the first device 510 (S307), and the first SoC 512 may request checksum data from the second SoC 532 (S308). Accordingly, the second SoC 532 may transmit the checksum data to the first SoC 512 (S309), the first SoC 512 may request a checksum to the first memory 511 (S310), and the first memory 511 may transmit the checksum result to the first SoC 512 (S311).

Referring to **FIG.** 19, the first SoC 512 compares the results of both checksums (S312), and checks whether both checksums are different from each other (S313). If they are different, the first SoC 512 may request storage data from the second SoC 532 (S314). The second SoC 532 receiving the above request may request storage data to the second memory 531 (S315), and the second memory 531 may transmit the storage data to the second SoC 532 (S316). Accordingly, the second SoC 532 may transmit the storage data to the first SoC 512 (S317), the first SoC 512 may transmit the storage data to the first memory 511 (S318), and the first memory 511 may store the received data (S319).

Referring to FIG. 19, when the vehicle 10 is operated by a user (S320), and the power is turned off (acc off) after the operation is finished (S321), the power supply 513 requests the first SoC 512 to prohibit data change (S322), the first SoC 512 holds a data process in progress (S323), and the power supply 513 may transmit a power-off signal to the first SoC 512 (S324). Thereafter, the power supply 513 may finally turn off the entire vehicle 10 (S325).

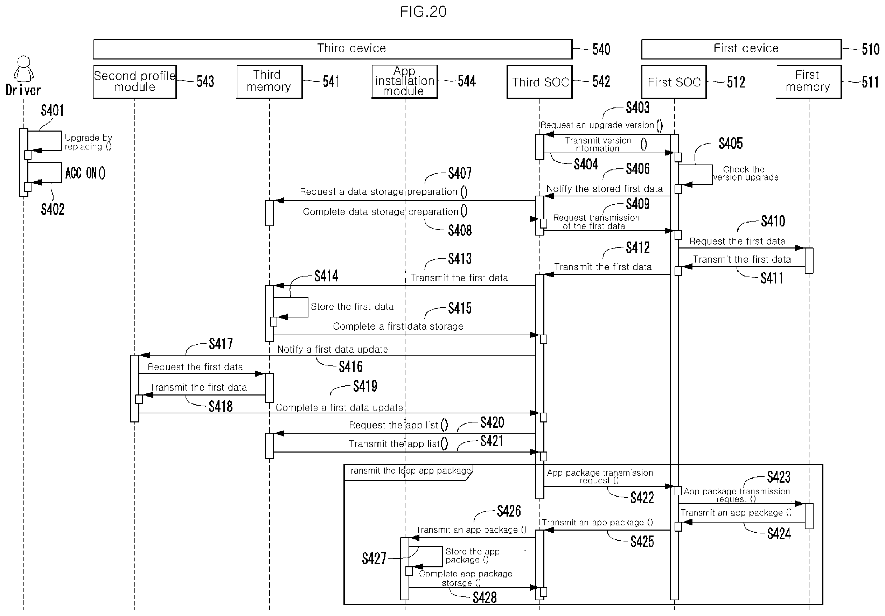

FIG. 20 is a diagram illustrating another example of an in-vehicle infotainment system according to the present disclosure.

Referring to FIG. 20, the third device 540 may further include a second profile module 543 and an app installation module 544. The second profile module 543 may be the same as or similar to the first profile module 533 of the second device 530. However, the second profile module 543 may obtain user-customized data, such as a user profile, from the first data stored in the first memory 511, without obtaining from a user's input. In addition, the app installation module 544 may be a module for managing an app package such as an APK file.

Referring to FIG. 20, a user may upgrade the second device 530 by replacing with the third device 540 (S401), and turn on the ignition of the vehicle 10 (S402). The first SoC 512 may request an upgrade version from the third SoC 542 (S403), and according to the request, the third SoC 542 may transmit version information to the first SoC 512 (S404). The first SoC 512 may check whether the version is upgraded based on the version information (S405). The first SoC 512 may transmit a notification message for notifying the third SoC 542 that there is first data stored in the first memory 511 (S406), the third Soc 542 may request a data storage preparation from the third memory 541 (S407), and the third memory 541 may transmit a data storage preparation complete message to the third Soc 542 (S408).

Referring to **FIG. 20****,** the third Soc 542 may request transmission of the first data from the first SoC 512 (S409), the first SoC 512 may request the first data including the user-customized data from the first memory 511 (S410), and the first memory 511 may transmit the first data to the first SoC 512 (S411). The first SoC 512 may transmit the first data to the third Soc 542 (S412), the third Soc 542 may transmit the first data to the third memory 541 (S413), and the third memory 541 may store the first data (S414). The third memory 541 may transmit a first data storage completion message to the third Soc 542 (S415), and the third Soc 542 may transmit a first data update notification message to the second profile module 543 (S416). The second profile module 543 may transmit a first data request message to the third memory 541 (S417), and the third memory 541 may transmit the first data to the second profile module 543 (S418).

Referring to **FIG.** 20, the second profile module 543 may transmit a first data update completion message to the third Soc 542 (S419), the third Soc 542 may transmit an application list request message to the third memory 541 (S420), and the third memory 541 may transmit the application list to the third Soc 542 (S421). The third Soc 542 may transmit an app package transmission request message to the first SoC 512 (S422), and the first SoC 512 may transmit the app package transmission request message to the first memory 511 (S423). The first memory 511 may transmit an app package to the first SoC 512 (S424), the first SoC 512 may transmit the app package to the third Soc 542 (S425), and the third Soc 542 may transmit the app package to the app installation module 544 (S426). The app installation module 544 may store the app package (S427), and the app installation module 544 may transmit an app package storage completion message to the third Soc 542 (S428). Processes S422 to S428 are a series of loop algorithms and may be repeatedly executed until all app packages in the application list are installed.

In addition, although the present disclosure has been described with reference to specific embodiments shown in the drawings, it is apparent to those skilled in the art that the present description is not limited to those exemplary embodiments and is embodied in many forms without departing from the scope of the present invention.

## Claims

1. An in-vehicle infotainment system (500) comprising:
a first device (510) included in a vehicle, and comprising a first memory (511);
a second device (530) electrically connected to the first device, attachable or detachable to the vehicle or from the vehicle, and comprising a second memory (531); and
an interface (520) configured to electrically connect the second device to the first device,
wherein in response to execution of a first application, the second device (530) is configured to generate first data including user-customized data and transmit the generated first data to the first device,
wherein the first memory (511) stores the first data including the user-customized data, the second device executes the first application based on the first data, and the first application is stored in the second memory,
wherein the user-customized data includes login information of the first application or a user profile information,
wherein in response to the second device being replaced with a third device (540) comprising a third memory (541), the first device is configured to transmit the first data including the user-customized data to the third device,
wherein the first device (510) is configured to check whether an operating system of the second device (530) is equal to an operating system of the third device (540), and in response to the operating system of the third device (540) being not equal to the operating system of the second device (530), transmit data including an application list received from the second device (530) to the third device (540),
wherein the third device (540) is configured to compare applications in the application list with applications installed in the third device (540), request an application which does not exist in the application list, receive and install the requested application.

2. The in-vehicle infotainment system of claim 1, wherein the third device (540) executes a second application based on the first data, and the second application is stored in the third memory.

3. The in-vehicle infotainment system of claim 2, wherein the first data further comprises application data received from the second device, and
the third device executes the second application based on the application data.

4. The in-vehicle infotainment system of any one of claims 1 to 4, wherein the first memory is divided into a plurality of partitions.

5. The in-vehicle infotainment system of claim 4, wherein the plurality of partitions comprise a first partition to store the first data.

6. The in-vehicle infotainment system of claim 4, wherein the plurality of partitions comprise a first partition and a second partition to alternately store the first data.

7. The in-vehicle infotainment system of any one of claims 1 to 6, wherein the first data is encrypted and stored in the first memory.

8. The in-vehicle infotainment system of any one of claims 1 to 7, wherein the first data is encrypted and transmitted to the second device.

9. The in-vehicle infotainment system of any one of claim 1 to 8, wherein the first data further comprises application list information received from the second device, and
wherein the third device installs a third application based on the application list information.

10. A method for upgrading an in-vehicle infotainment system (500) by replacing a second device (530) mounted in a vehicle comprising a first device (510) with a third device (540), the method comprising:
receiving (S1100) first data comprising user-customized data from the second device, wherein the user-customized data is generated based on execution of a first application;
storing (S1200) the first data in a first memory of the first device;
receiving (S1300) a dismounting message for the second device;
receiving (S1400) a coupling message for the third device; and
transmitting (S1500) the first data to the third device,
wherein the second device (530) executes the first application based on the first data,
wherein the user-customized data includes login information of the first application or a user profile information,
wherein the transmitting (S1500) the first data to the third device includes transmitting the first data including the user-customized data to the third device,
wherein the first device (510) is configured to check whether an operating system of the second device (530) is equal to an operating system of the third device (540), and in response to the operating system of the third device (540) being not equal to the operating system of the second device (530), transmit data including an application list received from the second device (530) to the third device (540),
wherein the third device (540) is configured to compare applications in the application list with applications installed in the third device (540), request an application which does not exist in the application list, receive and install the requested application.

11. The method of claim 10, wherein the third device executes a second application based on the first data.

12. The method of any one of claims 10 to 11, wherein receiving first data comprises:
detecting occurrence of an event for a backup of the first data;
executing a zero-defect test on the first data; and
receiving the first data based on the first data being zero-defect.

13. The method of claim 12, wherein receiving first data comprises recovering the first data based on the first data not being zero-defect.

14. The method of any one of claims 10 to 13, wherein the first memory is divided into a plurality of partitions,
wherein the first data is stored in any one of the plurality of partitions.

15. The method of claim 14, wherein the plurality of partitions comprise a first partition and a second partition to alternately store the first data.

## Patentansprüche

1. Fahrzeuginternes Infotainmentsystem (500), das aufweist:
eine erste Vorrichtung (510), die in einem Fahrzeug enthalten ist und einen ersten Speicher (511) aufweist;
eine zweite Vorrichtung (350), die elektrisch mit der ersten Vorrichtung verbunden ist, die an das Fahrzeug anbringbar oder vom Fahrzeug entfernbar ist, und einen zweiten Speicher (531) aufweist; und
eine Schnittstelle (520), die konfiguriert ist, die zweite Vorrichtung elektrisch mit der ersten Vorrichtung zu verbinden,
wobei in Reaktion auf das Ausführen einer ersten Anwendung die zweite Vorrichtung (530) konfiguriert ist, erste Daten zu erzeugen, die vom Benutzer angepasste Daten aufweisen, und die erzeugten ersten Daten an die erste Vorrichtung zu übertragen,
wobei der erste Speicher (511) die ersten Daten, die die vom Benutzer angepassten Daten aufweisen, speichert, die zweite Vorrichtung die erste Anwendung basierend auf den ersten Daten ausführt, und die erste Anwendung im zweiten Speicher gespeichert wird,
wobei die vom Benutzer angepassten Daten Anmeldeinformationen der ersten Anmeldung oder Benutzerprofilinformationen aufweisen,
wobei in Reaktion darauf, dass die zweite Vorrichtung durch eine dritte Vorrichtung (540) ersetzt wird, die einen dritten Speicher (541) aufweist, die erste Vorrichtung konfiguriert ist, die ersten Daten, die die vom Benutzer angepassten Daten aufweisen, an die dritte Vorrichtung zu übertragen,
wobei die erste Vorrichtung (510) konfiguriert ist, zu prüfen, ob ein Betriebssystem der zweiten Vorrichtung (530) gleich einem Betriebssystem der dritten Vorrichtung (540) ist und in Reaktion darauf, dass das Betriebssystem der dritten Vorrichtung (540) nicht gleich dem Betriebssystem der zweiten Vorrichtung (530) ist, Daten, die eine von der zweiten Vorrichtung (530) empfangene Anwendungsliste aufweisen, an die dritte Vorrichtung (540) zu übertragen,
wobei die dritte Vorrichtung (540) konfiguriert ist, Anwendungen in der Anwendungsliste mit Anwendungen zu vergleichen, die in der dritten Vorrichtung (540) installiert sind, eine Anwendung anzufordern, die in der Anwendungsliste nicht vorhanden ist, die angeforderte Anwendung zu empfangen und zu installieren.

2. Fahrzeuginternes Infotainmentsystem nach Anspruch 1,
wobei die dritte Vorrichtung (540) eine zweite Anwendung basierend auf den ersten Daten ausführt und die zweite Anwendung im dritten Speicher gespeichert wird.

3. Fahrzeuginternes Infotainmentsystem nach Anspruch 2,
wobei die ersten Daten weiterhin Anwendungsdaten aufweisen, die von der zweiten Vorrichtung empfangen wurden, und
die dritte Vorrichtung die zweite Anwendung basierend auf den Anwendungsdaten ausführt.

4. Fahrzeuginternes Infotainmentsystem nach einem der Ansprüche 1 bis 4, wobei der erste Speicher in mehrere Partitionen unterteilt ist.

5. Fahrzeuginternes Infotainmentsystem nach Anspruch 4, wobei die mehreren Partitionen eine erste Partition aufweisen, um die ersten Daten zu speichern.

6. Fahrzeuginternes Infotainmentsystem nach Anspruch 4, wobei die mehreren Partitionen eine erste Partition und eine zweite Partition aufweisen, um die ersten Daten abwechselnd zu speichern.

7. Fahrzeuginternes Infotainmentsystem nach einem der Ansprüche 1 bis 6, wobei die ersten Daten im ersten Speicher verschlüsselt und gespeichert werden.

8. Fahrzeuginternes Infotainmentsystem nach einem der Ansprüche 1 bis 7, wobei die ersten Daten verschlüsselt und an die zweite Vorrichtung übertragen werden.

9. Fahrzeuginternes Infotainmentsystem nach einem der Ansprüche 1 bis 8,
wobei die ersten Daten weiterhin Anwendungslisteninformationen aufweisen, die von der zweiten Vorrichtung empfangen wurden, und
wobei die dritte Vorrichtung eine dritte Anwendung basierend auf den Anwendungslisteninformationen installiert.

10. Verfahren zum Aktualisieren eines fahrzeuginternen Infotainmentsystems (500) durch Ersetzen einer zweiten Vorrichtung (530), die in einem Fahrzeug angebracht ist, das eine erste Vorrichtung (510) aufweist, durch eine dritte Vorrichtung (540), wobei das Verfahren aufweist:
Empfangen (S1100) von ersten Daten, die vom Benutzer angepasste Daten aufweisen, von der zweiten Vorrichtung, wobei die vom Benutzer angepassten Daten basierend auf der Ausführung der ersten Anwendung erzeugt werden;
Speichern (S1200) der ersten Daten in einem ersten Speicher der ersten Vorrichtung;
Empfangen (S1300) einer Ausbaunachricht für die zweite Vorrichtung;
Empfangen (S1400) einer Kopplungsnachricht für die dritte Vorrichtung; und
Übertragen (S1500) der ersten Daten an die dritte Vorrichtung,
wobei die zweite Vorrichtung (530) die erste Anwendung basierend auf den ersten Daten ausführt,
wobei die vom Benutzer angepassten Daten Anmeldeinformationen der ersten Anmeldung oder Benutzerprofilinformationen aufweisen,
wobei das Übertragen (S1500) der ersten Daten an die dritte Vorrichtung das Übertragen der ersten Daten, die die vom Benutzer angepassten Daten aufweisen, an die dritte Vorrichtung aufweist,
wobei die erste Vorrichtung (510) konfiguriert ist, zu prüfen, ob ein Betriebssystem der zweiten Vorrichtung (530) gleich einem Betriebssystem der dritten Vorrichtung (540) ist und in Reaktion darauf, dass das Betriebssystem der dritten Vorrichtung (540) nicht gleich dem Betriebssystem der zweiten Vorrichtung (530) ist, Daten, die eine von der zweiten Vorrichtung (530) empfangene Anwendungsliste aufweisen, an die dritte Vorrichtung (540) zu übertragen,
wobei die dritte Vorrichtung (540) konfiguriert ist, Anwendungen in der Anwendungsliste mit Anwendungen zu vergleichen, die in der dritten Vorrichtung (540) installiert sind, eine Anwendung anzufordern, die in der Anwendungsliste nicht vorhanden ist, die angeforderte Anwendung zu empfangen und zu installieren.

11. Verfahren nach Anspruch 10, wobei die dritte Vorrichtung eine zweite Anwendung basierend auf den ersten Daten ausführt.

12. Verfahren nach einem der Ansprüche 10 bis 11, wobei das Empfangen erster Daten aufweist:
Erfassen des Auftretens eines Ereignisses für eine Sicherung der ersten Daten;
Ausführen eines Tests auf Fehlerfreiheit für die ersten Daten; und
Empfangen der ersten Daten basierend darauf, dass die ersten Daten fehlerfrei sind.

13. Verfahren nach Anspruch 12, wobei das Empfangen von ersten Daten das Wiederherstellen der ersten Daten basierend darauf, dass die ersten Daten nicht fehlerfrei sind, aufweist.

14. Verfahren nach einem der Ansprüche 10 bis 13, wobei der erste Speicher in mehrere Partitionen unterteilt ist,
wobei die ersten Daten in einer beliebigen der mehreren Partitionen gespeichert sind.

15. Verfahren nach Anspruch 14, wobei die mehreren Partitionen eine erste Partition und eine zweite Partition aufweisen, um die ersten Daten abwechselnd zu speichern.

## Revendications

1. Système d'infodivertissement monté dans un véhicule (500) comprenant :
un premier dispositif (510) inclus dans un véhicule, et comprenant une première mémoire (511) ;
un deuxième dispositif (530) connecté électriquement au premier dispositif, pouvant être attaché au véhicule ou détaché du véhicule, et comprenant une deuxième mémoire (531) ; et
une interface (520) configurée pour connecter électriquement le deuxième dispositif au premier dispositif,
dans lequel, en réponse à une exécution d'une première application, le deuxième dispositif (530) est configuré pour générer des premières données incluant des données personnalisées utilisateur, et pour transmettre les premières données générées au premier dispositif,
dans lequel la première mémoire (511) stocke les premières données incluant les données personnalisées utilisateur, le deuxième dispositif exécute la première application sur la base des premières données, et la première application est stockée dans la deuxième mémoire,
dans lequel les données personnalisées utilisateur incluent des informations de connexion de la première application ou des informations de profil utilisateur,
dans lequel, en réponse à un remplacement du deuxième dispositif par un troisième dispositif (540) comprenant une troisième mémoire (541), le premier dispositif est configuré pour transmettre les premières données, incluant les données personnalisées utilisateur, au troisième dispositif,
dans lequel le premier dispositif (510) est configuré pour vérifier si un système opérationnel du deuxième dispositif (530) est égal à un système opérationnel du troisième dispositif (540), et en réponse au fait que le système opérationnel du troisième dispositif (540) n'est pas égal au système opérationnel du deuxième dispositif (530), transmettre des données incluant une liste d'applications reçue du deuxième dispositif (530) au troisième dispositif (540),
dans lequel le troisième dispositif (540) est configuré pour comparer des applications dans la liste d'applications à des applications installées dans le troisième dispositif (540), faire une requête d'une application qui n'existe pas dans la liste d'applications, recevoir et installer l'application ayant fait l'objet de la requête.

2. Système d'infodivertissement monté sur véhicule selon la revendication 1, dans lequel le troisième dispositif (540) exécute une deuxième application sur la base des premières données, et la deuxième application est stockée dans la troisième mémoire.

3. Système d'infodivertissement monté sur véhicule selon la revendication 2, dans lequel
les premières données comprennent en outre des données d'application reçues depuis le deuxième dispositif, et
le troisième dispositif exécute la deuxième application sur la base des données d'application.

4. Système d'infodivertissement monté sur véhicule selon l'une quelconque des revendications 1 à 4, dans lequel la première mémoire est divisée en une pluralité de partitions.

5. Système d'infodivertissement monté sur véhicule selon la revendication 4, dans lequel la pluralité de partitions comprennent une première partition pour stocker les premières données.

6. Système d'infodivertissement selon la revendication 4, dans lequel la pluralité de partitions comprennent une première partition et une seconde partition pour stocker en alternance les premières données.

7. Système d'infodivertissement monté sur véhicule selon l'une quelconque des revendications claims 1 à 6, dans lequel les premières données sont chiffrées et stockées dans la première mémoire.

8. Système d'infodivertissement monté sur véhicule selon l'une quelconque des revendications 1 à 7, dans lequel les premières données sont chiffrées et transmises au deuxième dispositif.

9. Système d'infodivertissement monté sur véhicule selon l'une quelconque des revendications 1 à 8, dans lequel les premières données comprennent en outre des informations de liste d'applications reçues depuis le deuxième dispositif, et
dans lequel le troisième dispositif installe une troisième application sur la base des informations de liste d'applications.

10. Procédé de mise à niveau d'un système d'infodivertissement dans un véhicule (500) par remplacement d'un deuxième dispositif (530) monté dans un véhicule comprenant un premier dispositif (510) par un troisième dispositif (540), le procédé comprenant les étapes consistant à :
recevoir (S1100) des premières données comprenant des données personnalisées utilisateur depuis le deuxième dispositif, les données personnalisées utilisateur étant générées sur la base d'une exécution d'une première application ;
stocker (S1200) les premières données dans une première mémoire du premier dispositif ;
recevoir (S1300) un message de démontage pour le deuxième dispositif ;
recevoir (S1400) un message de couplage pour le troisième dispositif ; et
transmettre (S1500) les premières données au troisième dispositif,
dans lequel le deuxième dispositif (530) exécute la première application sur la base des premières données,
dans lequel les données personnalisées utilisateur incluent des informations de connexion de la première application ou des informations de profil utilisateur,
dans lequel l'étape consistant à transmettre (S1500) les premières données au troisième dispositif incluent de transmettre les données personnalisées utilisateur au troisième dispositif,
dans lequel le premier dispositif (510) est configuré pour vérifier si un système opérationnel du deuxième dispositif (530) est égal à un système opérationnel du troisième dispositif (540), et en réponse au fait que le système opérationnel du troisième dispositif (540) n'est pas égal au système opérationnel du deuxième dispositif (530), transmettre des données incluant une liste d'applications reçue du second dispositif (530) au troisième dispositif (540),
dans lequel le troisième dispositif (540) est configuré pour comparer des applications dans la liste d'application à des applications installées dans le troisième dispositif (540), faire une requête d'une application qui n'existe pas dans la liste d'applications, recevoir et installer l'application ayant fait l'objet de la requête.

11. Procédé selon la revendication 10, dans lequel le troisième procédé exécute une deuxième application sur la base des premières données.

12. Procédé selon l'une quelconque des revendications 10 à 11, dans lequel l'étape consistant à recevoir les premières données comprend de :
détecter une occurrence d'un événement pour une sauvegarde des premières données ;
exécuter un test zéro défaut sur les premières données ; et
recevoir les premières données sur la base des premières données qui sont zéro défaut.

13. Procédé selon la revendication 12, dans lequel l'étape consistant à recevoir les premières données comprend de récupérer les premières données sur la base des premières données qui ne sont pas zéro défaut.

14. Procédé selon l'une quelconque des revendications 10 à 13, dans lequel la première mémoire est divisée en une pluralité de partitions,
dans lequel les premières données sont stockées dans l'une quelconque de la pluralité de partitions.

15. Procédé selon la revendication 14, dans lequel la pluralité de partitions comprennent une première partition et une seconde partition pour stocker en alternance les premières données.
